# EUROPÄISCHE PATENTSCHRIFT

(11) **EP 4 215 912 B1**
(45) Veröffentlichungstag und Bekanntmachung des Hinweises auf die Patenterteilung: **28.10.2026**
(21) Anmeldenummer: 23151906.7
(22) Anmeldetag: 17.01.2023
(51) Int. Cl.: G01N 30/20, G01N 30/16, G01N 30/80, G01N 30/34

(54) **CHROMATOGRAPHIE-ANLAGE**
CHROMATOGRAPHY SYSTEM
INSTALLATION DE CHROMATOGRAPHIE

(30) Priorität: 24.01.2022 DE 102022101546
(43) Veröffentlichungstag der Anmeldung: 26.07.2023
(73) Patentinhaber: Bozic, Alexander, 61440 Oberursel (DE)
(72) Erfinder: Bozic, Alexander, 61440 Oberursel (DE)
(74) Vertreter: Schultheiss, Jürgen

(56) Entgegenhaltungen:
- EP-A1- 2 677 313
- WO-A1-2013/134222
- WO-A1-2018/034649
- US-A1- 2003 034 307
- US-A1- 2021 180 586

## Beschreibung

Die vorliegende Erfindung betrifft eine Chromatographie-Anlage sowie ein Chromatographie-Verfahren.

Chromatographische Techniken sind wichtige Werkzeuge zur Identifizierung und Trennung komplexer Proben. Das Grundprinzip, das chromatographischen Techniken zugrunde liegt, ist die Trennung eines Gemischs in einzelne Komponenten, indem man die Mischung in einem sich bewegenden Fluid durch ein retentives Medium transportiert. Das sich bewegende Fluid wird typischerweise als die mobile Phase bezeichnet und das retentive Medium wird typischerweise als die stationäre Phase bezeichnet. Die Trennung der verschiedenen Konstituenten der Gemische basiert auf einer unterschiedlichen Verteilung zwischen der mobilen und stationären Phase. Unterschiede im Verteilungskoeffizienten der Komponenten führen zu unterschiedlicher Retention an der stationären Phase, was zur Trennung führt.

Fortgeschrittene und inzwischen gut etablierte Chromatographie-Verfahren sind unter anderem die Hochleistungsflüssigkeitschromatographie (HPLC) und die überkritische Flüssigkeitschromatographie (SFC, Supercritical Fluid Chromatography).

Die zweckmäßige Auftragung der Probe auf die Chromatographiesäule ist für alle Techniken, insbesondere jedoch bei der HPLC und der SFC ein wesentlicher Schritt, um eine gute und zuverlässige Auftrennung zu bewirken.

In der HPLC muss eine zu untersuchende Probe in einen Hochdruck-Flüssigkeitsstrom eingespeist werden, wobei dieser nur so kurz wie möglich unterbrochen werden darf. Für diesen Zweck werden Hochdruck-Injektionsventile verwendet, die eine nahezu unterbrechungsfreie Umschaltung des Flüssigkeitsstroms ermöglichen. Diese Problematik wird beispielsweise in der Druckschrift DE10 2008 006 266 A1 sowie der darin zitierten Veröffentlichungen ausführlich dargestellt.

Durch eine überkritische Flüssigkeitschromatographie (SFC, Supercritical Fluid Chromatography) können viele Vorteile erzielt werden, so dass verschiedene Substanzen besonders einfach und zuverlässig getrennt, chemisch analysiert, identifiziert und quantifiziert werden können. Bei Verwendung von Kohlendioxid (CO₂) als Flüssigkeit in SFC-Anwendungen wird die Extraktion der Substanzen im Allgemeinen oberhalb der kritischen Temperatur von 31 ° C und oberhalb eines kritischen Drucks von 7400 kPa (74 bar) durchgeführt.

Um CO₂ oder ein CO₂-Gemisch in einem flüssigen Zustand innerhalb einer Chromatographiesäule zu halten, muss das gesamte Chromatographiesystem auf einem vorgegebenen Druckniveau gehalten werden. Zu diesem Zweck ist stromabwärts der Chromatographiesäule und stromabwärts eines jeweiligen Detektors typischerweise ein Rückdruckregler vorgesehen, um den Druck innerhalb des Chromatographiesystems auf einem vorgegebenen Niveau zu halten. Hierdurch sind jedoch Probleme mit der Probeneinbringung verknüpft. Diese werden beispielsweise in den Druckschriften US 6,428,70 2B1 und US 6,576,125 B2 ausführlich dargestellt. Weitere Chromatographie-Anlagen werden in den Druckschriften US 2003/034307A1 und WO 2018/034649A1 dargelegt.

Die bekannten HPLC- und SFC-Verfahren werden seit längerem sowohl für analytische als auch präparative Zwecke eingesetzt, wobei entsprechende Anlagen kommerziell erhältlich sind. Es ist jedoch ein allgemeines Bestreben, die Eigenschaften dieser Anlagen und Verfahren zu verbessern.

So besteht insbesondere ein Interesse daran die Reinheit der aufgetrennten bzw. aufgereinigten Substanzen zu erhöhen. Ferner sollte der durch die Aufreinigung verursachte Verlust an zu trennenden oder aufzureinigenden Substanzen möglichst gering sein. Weiterhin sollten die Chromatographie-Anlage oder das Chromatographie-Verfahren in der Lage sein, innerhalb kurzer Zeit aufeinander folgende, möglicherweise nicht miteinander verbundene Proben so schnell wie möglich und ohne Kontamination durch frühere Proben zu verarbeiten.

In Anbetracht des Standes der Technik ist es daher Aufgabe der vorliegenden Erfindung, eine Chromatographie-Anlage bereitzustellen, die die zuvor dargelegten Probleme löst. Insbesondere sollte die Anlage zu besonders reinen Produkten führen, die mit einer hohen Ausbeute gewonnen werden. Ferner sollte die Anlage einen hohen Durchsatz aufweisen, wobei in einer zügigen Folge verschiedene Proben aufgetragen und aufgereinigt werden können, ohne dass aufwendige Reinigungszyklen notwendig wären.

Weiterhin sollten die zu trennenden Substanzen einen möglichst geringen Laufzeitunterschied aufweisen können, ohne dass hierdurch deren Auftrennung in der Anlage zunichte gemacht werden würde. Weiterhin sollte bei einem vorgegebenen Laufzeitunterschied eine möglichst hohe Auftrennung der Chargen durch die Anlage bewirkt werden. Insbesondere sollte die Chromatographie-Anlage eine exzellente Trennung bewirken, so dass durch eine Detektion sehr klare Signale der aufzutrennenden Substanzen erhalten werden.

Eine weitere Aufgabe besteht darin durch eine Chromatographie-Anlage bereitzustellen, die besonders kostengünstig und wartungsarm betrieben und hergestellt werden kann.

Hierbei sollte die Anlage möglichst einfach und kostengünstig betreibbar sein und zu weiteren Kosten- und Handhabbarkeitsvorteilen führen.

Ferner sollte die Chromatographie-Anlage bezogen auf den Volumenstrom, mit dem diese betrieben wird, möglichst preiswert sein.

Ferner ist die Bereitstellung eines Verfahrens zur Durchführung einer Chromatographie Ziel dieser Erfindung, beim dem eine möglichst hohe Ausbeute an gereinigten Substanzen erzielt werden kann. Hierbei sollten die aufgetrennten Substanzen eine möglichst hohe Reinheit aufweisen. Weiterhin sollte das Verfahren möglichst einfach und kostengünstig durchführbar sein und zu weiteren Kosten- und Handhabbarkeitsvorteilen führen.

Darüber hinaus sollte eine hohe Ausbeute und Reinheit der zu trennenden Substanzen für möglichst unterschiedliche Flüssigkeitsgemische beziehungsweise Gas-Flüssigkeitsgemische erzielbar sein.

Ferner ist eine Aufgabe der vorliegenden Erfindung Komponenten bereitzustellen, die einen möglichst einfachen Umbau einer bekannten HPLC-Anlage zu einer SFC-Anlage ermöglichen. Hierbei sollte auch ein Umbau von präparativen HPLC-Anlagen ermöglicht werden.

Gelöst werden diese sowie weitere nicht explizit genannte Aufgaben, die jedoch aus den hierin einleitend diskutierten Zusammenhängen ohne weiteres ableitbar oder erschließbar sind, durch eine Chromatographie-Anlage mit allen Merkmalen des

### Patentanspruchs 1.

Der Gegenstand der vorliegenden Erfindung ist in den Ansprüchen definiert.

Gegenstand der vorliegenden Erfindung ist dementsprechend eine Chromatographie-Anlage umfassend mindestens zwei Pumpen, eine erste Pumpe, die mit einem Flüssigkeitsreservoir für ein erstes Fluid verbindbar oder verbunden ist, und eine zweite Pumpe, die mit einem Flüssigkeitsreservoir für ein zweites Fluid verbindbar oder verbunden ist, wobei die Pumpenauslassleitungen der ersten Pumpe und der zweiten Pumpe mit einem Verbindungsstück verbunden sind und nach diesem Verbindungsstück in Flussrichtung gesehen eine Chromatographiesäule vorgesehen ist,
die dadurch gekennzeichnet ist, dass
in Flussrichtung gesehen vor dem Verbindungsstück eine Zugabeeinheit vorgesehen ist und zwischen Verbindungsstück und Chromatographiesäule ein Mischerschaltventil und ein über das Mischerschaltventil schaltbarer Mischer vorgesehen ist, wobei das Mischerschaltventil mindestens zwei Schaltpositionen aufweist, wobei in einer ersten Position der Mischer zuschaltbar ist und in einer zweiten Position der Mischer umleitbar ist.

Durch die vorliegende Erfindung wird insbesondere bewirkt, dass besonders reine Produkte erhalten werden, die mit einer hohen Ausbeute gewonnen werden. Ferner weist die Anlage einen hohen Durchsatz auf, wobei in einer zügigen Folge verschiedene Proben aufgetragen und aufgereinigt werden können, ohne dass aufwendige Zyklen zur Reinigung und/oder zum Äquilibrieren der Chromatographiesäure notwendig wären. Insbesondere steigt die Reproduzierbarkeit von Zyklen zur Reinigung und/oder Auftrennung von Probenzusammensetzungen stark an, so dass die Peaks mit einer verbesserten Genauigkeit vorhergesagt werden können.

Insbesondere im Vergleich mit anderen Chromatographie-Anlagen gelingt eine Verbesserung dahingehend, dass bei einem vorgegebenen Laufzeitunterschied eine sehr hohe Auftrennung der Chargen durch die Chromatographie-Anlage bewirkt werden kann. Weiterhin kann bei einem relativ geringen Laufzeitunterschied der zu trennenden Substanzen, eine sehr gute Auftrennung in der Chromatographie-Anlage bewirkt werden. Insbesondere werden sehr schmale Signale der aufzutrennenden Substanzen bei einer Detektion erhalten.

Hierbei können auch sehr einfach konstruierte Pumpen eingesetzt werden, so dass weitere Investitionskostenvorteile erzielt werden.

Ferner werden sehr gute Ergebnisse auch bei Chromtographieverfahren erzielt, bei denen die Anlage mit einem Gradienten betrieben wird. Darüber hinaus kann ein SFC-Verfahren auch bei sehr unterschiedlichen Volumenströmen des Aerosols durchgeführt werden, ohne dass die wirtschaftlichen Vorteile stark beeinträchtigt werden würden.

Ferner können durch das vorliegende Verfahren sowie die Chromatographie-Anlage zur Durchführung eines Verfahrens, die Komplexität und die Kosten der technischen Ausrüstung reduziert werden, die für die Einrichtung der SFC-Analyse erforderlich ist. Hierbei können auch HPLC-Anlagen umgebaut werden, die für einen präparativen Einsatz vorgesehen sind.

Das erfindungsgemäße Chromatographie-Anlage umfasst mindestens zwei Pumpen, eine erste Pumpe und eine zweite Pumpe. Die Art der Pumpen ist für die vorliegende Erfindung unerheblich. So können Drehkolbenpumpen, Kreiselpumpen, Zahnradpumpen und Kolbenpumpen eingesetzt werden. Allerdings ermöglicht die Erfindung den Einsatz von kostengünstigen Kolbenpumpen, die vorzugweise mindestens zwei Kolben umfassen können. Bei Kolbenpumpen mit mindestens zwei Kolben können die zwei Kolben über eine Nockenwelle gesteuert werden. Ferner können die zwei Kolben unabhängig voneinander gesteuert werden, wobei die Steuerung über eine Nockenwelle vielfach kostengünstiger ist und für die Zwecke der vorliegenden Erfindung eingesetzt werden kann. Vorzugsweise ist die erste Pumpe und/oder die zweite Pumpe als Kolbenpumpe ausgestaltet ist, wobei der Pumpenkopf bevorzugt kühlbar ist. Die Kühlbarkeit des Pumpenkopfs ist insbesondere bei einer Chromatographie-Anlage zweckmäßig, die als SFC-Anlage ausgestaltet ist.

Die vorliegende Erfindung bewirkt besonders überraschend, dass auch mit kostengünstigen Pumpen hervorragende Trennleistungen erzielbar sind.

Die erste Pumpe ist mit einem Flüssigkeitsreservoir für ein erstes Fluid verbindbar oder verbunden, und eine zweite Pumpe ist mit einem Flüssigkeitsreservoir für ein zweites Fluid verbindbar oder verbunden. Die Art des Flüssigkeitsreservoirs ist nicht in einer besonderen Weise begrenzt, sondern kann nach den spezifischen Anforderungen ausgestaltet werden.

Beispielsweise kann vorgesehen sein, dass dem Flüssigkeitsreservoir für ein zweites Fluid und der zweiten Pumpe eine Kühlung für das Fluid vorgesehen ist. Diese Ausführungsform ist insbesondere bei einer Chromatographie-Anlage zweckmäßig, die als SFC-Anlage ausgestaltet ist. Durch diese Ausführungsform kann sichergestellt werden, dass keine oder nur eine geringe Gasbildung eintritt, wobei dieser Punkt insbesondere bei relativ geringem Druck im Reservoir, bei CO₂ von 7000 kPa (70 bar) oder weniger, insbesondere 6000 kPa (60 bar) oder weniger sinnvoll ist.

Die zweite Pumpe kann in einer bevorzugten Ausgestaltung als System zum Pumpen einer kompressiblen Flüssigkeit ausgestaltet sein. Ein bevorzugtes System zum Pumpen einer kompressiblen Flüssigkeit ist aus dem Stand der Technik, beispielsweise der Druckschrift WO 2019/086671 A1 mit der Anmeldenummer PCT/EP2018/080182 mit dem Anmeldedatum 05. November 2018 bekannt.

Die Pumpenauslassleitungen der ersten und der zweiten Pumpe werden in ein Verbindungsstück zusammengeführt und aus diesem Verbindungsstück in eine gemeinsame Auslassleitung ausgeleitet. Nach diesem Verbindungsstück ist in Flussrichtung gesehen eine Chromatographiesäule vorgesehen. Derartige Verbindungsstücke sind als solche bekannt und unterliegen keiner besonderen Begrenzung.

In Flussrichtung gesehen ist vor dem Verbindungsstück eine Zugabeeinheit vorgesehen. Über die Zugabeeinheit wird eine aufzutrennende Probe in die Chromatographie-Anlage eingespeist. Diese Zugabeeinheiten sind als solche bekannt und werden auch als Probengeber bezeichnet. Beispielsweise kann die Zugabeeinheit als Einspeisestelle ausgestaltet sein, über die die Probe in die Chromatographie-Anlage zugegeben werden kann. In einer bevorzugten Ausgestaltung umfasst die Zugabeeinheit eine Probeschleife und ein Injektionsventil, über das die Probeschleife in eine Fließverbindung mit dem Verbindungsstück schaltbar ist.

Die Zugabeeinheit umfasst vorzugsweise eine Probeschleife in die eine aufzutrennende Probe eingebracht werden kann. Die Probeschleife ist in Fließverbindung mit einem der Flüssigkeitsreservoirs, vorzugsweise dem ersten Flüssigkeitsreservoir und dem Verbindungsstück schaltbar. Die Probeschleife kann durch einen Überdruck oder einen Unterdruck mit einer Probe beschickt werden. Beispielsweise kann diese durch Injektion befüllt werden. Ferner kann ein Probengefäß vor einer Probenschleife angeordnet sein und nach der Probenschleife ein Abfallgefäß, wobei zwischen Probenschleife und Abfallgefäß eine Pumpe, beispielsweise eine Schlauch- oder eine Zahnradpumpe angeordnet ist, die aus dem Probengefäß eine Probe ansaugt und in die Probenschleife überführt. Das Volumen der Probenschleife kann entsprechend den Bedürfnissen gewählt werden. Vorzugsweise kann vorgesehen sein, dass das Volumen der Probenschleife im Bereich von 0,5 ml bis 30 ml, vorzugsweise im Bereich von 1 ml bis 20 ml, besonders bevorzugt im Bereich von 2,5 ml bis 10 ml aufweist.

Beispielsweise werden geeignete Zugabeeinheiten in den Druckschriften DE 10 2008 006266 A1, WO 2008/107562 A2, WO 2010/139359 A1, DE 2020/16100451 U1, WO 2018/128836 A1 und WO 2013/134222 A1 beschrieben.

Vorzugsweise kann vorgesehen sein, dass die Zugabeeinheit ein Injektionsventil umfasst, wobei das Injektionsventil zumindest zwei Probenschleifen-Ports sowie zwei Hochdruck-Ports für das Zuführen und Abführen von unter hohem Druck stehendem Fluid aufweist.

Die Probenschleifen-Ports sind vorzugsweise mit einer Probenschleife verbunden oder verbindbar.

Die Beschickung der Probenschleife kann über Verfahren erfolgen, die aus dem Stand der Technik bekannt sind. Beispielsweise kann vorgesehen sein, dass die Probenschleife über Anschlüsse zugänglich ist, die unabhängig vom Injektionsventil der Zugabeeinheit schaltbar sind.

In einer bevorzugten Ausführungsform kann vorgesehen sein, dass das Injektionsventil zumindest zwei Probenschleifen-Ports, zwei Hochdruck-Ports für das Zuführen und Abführen von unter hohem Druck stehendem Fluid sowie zwei Ports für das Zu- und Ausleiten von Probenzusammensetzung und/oder Fluid in und aus der Probenschleife aufweist. Nähere Ausführungen hierzu finden sich in der Figurenbeschreibung.

Bevorzugt kann vorgesehen sein, dass ein Hochdruck-Port mit einer Leitung verbunden ist, die mit der ersten Pumpe verbunden ist und der andere Hochdruck-Port mit einer Leitung verbunden ist, die mit dem Verbindungsstück verbunden ist.

Ferner kann vorgesehen sein, dass die Zugabeeinheit nach der ersten Pumpe vorgesehen ist, in Flussrichtung gesehen.

Zwischen Verbindungsstück und Chromatographiesäule ist ein Mischerschaltventil und ein über das Mischerschaltventil schaltbarer Mischer vorgesehen, wobei das Mischerschaltventil mindestens zwei Schaltpositionen aufweist, wobei in einer ersten Position der Mischer zuschaltbar ist und in einer zweiten Position der Mischer umleitbar ist.

Ferner kann vorgesehen sein, dass der Fließweg eines Fluids in der zweiten Position des Mischerschaltventils, bei der der Mischer umleitbar ist, kürzer ist als in der ersten Position des Mischerschaltventils, bei der der Mischer zuschaltbar ist. Der Fließweg eines Fluids ergibt sich bei einem vorgegebenen Volumenstrom aus der Fließzeit. Daher bezieht sich der Fließweg auf das Volumen welches ein Fluid einnimmt. Demgemäß ist das Volumen, welches von einem Fluid eingenommen wird, zwischen dem Verbindungsstück und der Chromatographiesäule in der zweiten Position des Mischerschaltventils, bei der der Mischer umleitbar ist, kleiner ist als in der ersten Position des Mischerschaltventils, bei der der Mischer zuschaltbar ist.

Die Ausgestaltung des Mischerschaltventils ist keiner besonderen Begrenzung unterworfen und kann gemäß spezifischen Bedürfnissen ausgestaltet werden.

Vorzugsweise kann vorgesehen sein, dass das Mischerschaltventil mindestens vier Ports umfasst, wobei zwei Ports mit einem Mischer verbunden sind. Ferner kann vorgesehen sein, dass einer der vier Ports des Mischerschaltventils mit einer Leitung verbunden ist, die mit dem Verbindungsstück verbunden ist, und einer der vier Ports des Mischerschaltventils mit einer Leitung verbunden ist, die mit der Chromatographiesäule verbunden ist.

Die Chromatographie-Anlage umfasst mindestes einen Mischer, der über das Mischerschaltventil schaltbar ist. Der Mischer kann als aktiver oder passiver Mischer ausgestaltet sein. Überraschende Vorteile können durch den Einsatz von passiven Mischern erreicht werden. Besondere, nicht vorhersagbare Vorteile können insbesondere dadurch erzielt werden, dass der Mischer als statischer Mischer ausgestaltet ist. Statische Mischer umfassen strömungsbeeinflussende Elemente, die ein einen Körper eingebracht sind, der einen Zu- und eine Ableitung aufweist. Beispielsweise kann ein rohrförmiger, mit inerten Partikeln versehener Körper als statischer Mischer eingesetzt werden.

Das Volumen des Mischers kann nach den Bedürfnissen des Anwenders gewählt werden, wobei dies im Allgemeinen von der Leistungsfähigkeit der Anlage abhängig ist, wie beispielsweise dem Volumenstrom, den die Anlage bereitstellen kann. Je größer der Volumenstrom, desto größer das Volumen bevorzugter Mischer. Ferner kann vorgesehen sein, dass der Mischer ein Volumen im Bereich von 0,5 ml bis 60 ml, vorzugsweise im Bereich von 1 ml bis 30 ml aufweist.

Ferner kann vorgesehen sein, dass mit der Anlage eine Chromatographie mit einem Lösungsmittelgradienten durchführbar ist.

Vorzugsweise kann vorgesehen sein, dass die Chromatographie-Anlage über eine Chromatographie-Anlagen-Steuerung steuerbar ist.

Ferner kann vorgesehen sein, dass die Chromatographie-Anlage mindestens einen Detektor aufweist. Vorzugsweise kann vorgesehen sein, dass die Chromatographie-Anlage einen UV-Detektor umfasst. Weiterhin kann vorgesehen sein, dass die Chromatographie-Anlage ein Massenspektrometer als Detektor umfasst. In einer besonders bevorzugten Ausführungsform umfasst die Anlage einen UV-Detektor und ein Massenspektrometer.

Weiterhin kann die Chromatographie-Anlage einen Fraktionssammler aufweisen, über den aufgereinigte Proben gesammelt werden können.

In einer besonders bevorzugten Ausgestaltung der vorliegenden Erfindung kann vorgesehen sein, dass die Chromatographie-Anlage als SFC-Anlage ausgestaltet ist. Hierbei weist die Anlage vorzugsweise Chromatographie-Anlage eine Chromatographiesäule und in Flussrichtung gesehen nachfolgend mindestens ein Rückdruckregler auf.

Besonders bevorzugt kann vorgesehen sein, dass in Flussrichtung gesehen nach dem Rückdruckregler ein Gas-Flüssig-Abscheider vorgesehen ist.

Eine solche SFC-Chromatographie-Anlage wird beispielhaft unter Verwendung von überkritischem CO₂ zusammen mit einem Lösungsmittel beispielsweise mit Methanol betrieben. Demgemäß weist eine für überkritische Flüssigkeitschromatographie ausgelegte Chromatographie-Anlage mindestens einen Speicherbehälter für das Lösungsmittel und einen Speicherbehälter für das überkritische Fluid, beispielsweise CO₂ auf. Im Allgemeinen wird das Fluid aus dem Speicher entnommen und mit einer jeweils mindestens einer Pumpe in die ein Mischer überführt, welche mit einer Chromatographiesäule in Fließverbindung steht. Die Pumpen und/oder das Mischer sowie die Chromatographiesäule können mit einer Temperierung versehen sein, um jeweils eine vorgegebene Temperatur einstellen zu können. Hierzu können insbesondere Wärmetauscher vorgesehen sein. Die Zugabe von zu trennenden Mischungen, insbesondere aufzureinigenden Substanzen, kann durch eine zuvor näher ausgeführte Zugabeeinheit erfolgen, die vorzugsweise in der Leitung vorgesehen sind, in der das Lösungsmittel zum Mischer geführt wird.

Das die Chromatographiesäule verlassende Fluid wird vorzugsweise zumindest teilweise einer Detektions- oder Analyseeinheit zugeführt. Beispiele für eine Detektions- oder Analyseeinheit sind unter anderem UV-Detektoren und/oder Massenspektrometer.

Bevorzugt kann vorgesehen sein, dass die Chromatographie-Anlage eine Injektionsvorrichtung umfasst, mit der automatisch Proben in die Chromatographieanlage injiziert werden können.

Das die Chromatographiesäule verlassende Fluid wird vorzugsweise zumindest teilweise einer Detektions- oder Analyseeinheit zugeführt. Vorzugsweise kann vorgesehen sein, dass die Chromatographie-Anlage einen UV-Detektor umfasst. Weiterhin kann vorgesehen sein, dass die Chromatographie-Anlage ein Massenspektrometer als Detektor umfasst. In einer besonders bevorzugten Ausführungsform umfasst die Anlage einen UV-Detektor und ein Massenspektrometer. Hierbei können auch weitere Verfahren zur Detektion eingesetzt werden, die beispielsweise die Lichtstreuung, die Fluoreszenz oder den Brechungsindex messen. Ferner werden vielfach Massenspektrometer und/oder Leitfähigkeitsdetektoren usw. eingesetzt.

Nach der Chromatographiesäule und vorzugsweise nach der Detektions- oder Analyseeinheit ist im Allgemeinen ein Rückdruckregler und vorzugsweise nach dem Rückdruckregler ein Wärmetauscher vorgesehen. Das den Wärmetauscher verlassende Aerosol wird vorzugsweise nachfolgend einem Gas-Flüssig-Abscheider zugeführt.

Bevorzugt einzusetzende Gas-Flüssig-Abscheider sind aus dem Stand der Technik, beispielsweise der Druckschrift WO 2014/012962 A1 mit der Anmeldenummer PCT/EP2013/06067 mit dem Anmeldedatum 17. Juli 2013 bekannt.

Ein besonders bevorzugt einzusetzender Gas-Flüssig-Abscheider wird in der PCT-Anmeldung WO 2018/210818 A1 mit der Anmeldenummer PCT/EP2018/062537 mit dem Anmeldedatum 15. Mai 2018 dargelegt.

Eine unerwartete Verbesserung einer Prallabscheidung kann durch die Anordnung und Ausgestaltung einer Abscheideöffnung erzielt werden. Hierdurch kann insbesondere das bei der Prallabscheidung bereitgestellte Gasvolumen vermindert werden, so dass das Gesamtvolumen des Gas-Flüssig-Abscheiders verringert werden kann. Hierdurch kann überraschend die Trennleistung der Chromatographie-Anlage verbessert werden.

Ein bevorzugter Gas-Flüssig-Abscheider umfasst einen Abscheidebereich mit einer Einlassdüse, einer Pralleinheit und einer Gasleiteinheit.

Vorzugsweise ist Abscheidebereich so ausgestaltet, dass eine Prallabscheidung bewirkt wird. Prallabscheidung bedeutet, dass sich die im Aerosol befindlichen Flüssigkeitströpfchen gegen eine Pralleinheit geleitet werden, wodurch die Flüssigkeitströpfchen einen Flüssigkeitsfilm bilden können.

Als Pralleinheit kann hierbei jeder Körper dienen, gegen den der Aerosolstrom geleitet werden kann. Beispielsweise kann der Aerosolstrom gegen einen oberen Bereich des Abscheidebereichs geleitet werden, beispielsweise gegen einen oberen Abschluss des Abscheidebereichs. Hierbei kann ein Vorsprung, beispielsweise ein Dorn oder ähnliches vorgesehen sein, auf den der Aerosolstrom beaufschlagt wird, so dass die auf die Pralleinheit geleiteten Flüssigkeitströpfchen nicht zurückgeworfen werden oder von der Pralleinheit zurückprallen, sondern einen Film bilden.

Ein bevorzugter Gas-Flüssig-Abscheider nutzt im Betrieb die Gravitation, die eine Trennung von Gas und Flüssigkeit bewirkt. Demgemäß bezieht sich der Ausdruck oben auf die Ausrichtung des Gas-Flüssig-Abscheiders, die im Betrieb vorliegt, so dass ein Gas nach oben ausströmen kann, während unten die Gegenrichtung ist, über die eine Flüssigkeit den Gas-Flüssig-Abscheider verlässt.

Neben einer Pralleinheit ist im Abscheidebereich des Gas-Flüssig-Abscheiders vorzugsweise eine Einlassdüse vorgesehen. Durch die Einlassdüse wird das Aerosol in den Gas-Flüssig-Abscheider, insbesondere in den Abscheidebereich des Gas-Flüssig-Abscheiders geleitet.

Hierbei ist Einlassdüse vorzugsweise so ausgestaltet, dass ein durch die Einlassdüse geleiteter Gas-Flüssigstrom gegen die Pralleinheit beaufschlagbar ist, wie dies zuvor bereits im Hinblick auf die Pralleinheit dargelegt wurde.

Die Form und die Art der Einlassdüse sind unkritisch, so dass diese vom Fachmann im Rahmen seiner Fähigkeiten gewählt werden kann. So kann die Einlassdüse beispielsweise so ausgestaltet sein, dass das Aerosol in Form eines sehr engen Strahls auf die Pralleinheit geleitet wird. Ferner kann die Einlassdüse auch so konstruiert ist, dass ein kegelförmiger Spühnebel auf die Pralleinheit geleitet wird.

Der Gas-Flüssig-Abscheider weist vorzugsweise eine Abscheideöffnung auf, die zwischen Abscheidebereich und Trennbereich angeordnet ist, so dass eine gas- und flüssigkeitsoffene Verbindung zwischen diesen Bereichen besteht. Durch die Abscheideöffnung wird vorzugsweise eine Trägheitsabscheidung bewirkt. Dies bedeutet, dass die an der Pralleinheit und/oder der Gasleiteinheit in Form eines Flüssigkeitsfilms nach unten laufende Flüssigkeit von dem Gas durch Trägheit abschieden wird. Hierbei beschleunigt das Gas vorzugsweise die Flüssigkeit, so dass die Flüssigkeit mit einer höheren Geschwindigkeit in den Trennbereich überführt wird, als ohne diese Gasbeschleunigung. Hierbei verbleibt der Flüssigkeitsfilm vorzugsweise an einer Wand des Abscheidebereichs, die vorzugsweise als Teil der der Pralleinheit und/oder der Gasleiteinheit ausgestaltet ist, in Form eines Films und geht unmittelbar in den Trennbereich über, ohne dass der Flüssigkeitsfilm diese Wand, die in den Trennbereich übergeht, verlässt. Die Gasphase haftet im Gegensatz zur Flüssigphase nicht an einer Wand, sondern ist in der Lage nach oben auszutreten und in den Gasausleitbereich überzugehen. Im Gegensatz hierzu wird die Flüssigkeit in den Trennbereich abgeleitet und über den Flüssigauslass, der im Trennbereich vorgesehen ist, dem Gas-Flüssig-Abscheider entnommen.

Vorzugsweise ist der Abstand der Einlassdüse von der Pralleinheit größer als die kleinste Längenausdehnung der Abscheideöffnung. Hierbei ergibt sich der Abstand der Einlassdüse von der Pralleinheit aus dem Weg des Aerosols vom Verlassen der Einlassdüse bis zum Auftreffen auf die Pralleinheit. Die kleinste Längenausdehnung der Abscheideöffnung bezieht sich auf die Breite oder Länge der Abscheideöffnung, wobei sich die Ausdehnung der Ebene bis zum Rand der Abscheideöffnung auf die Ebene zwischen Abscheidebereich und Trennbereich bezogen wird, die zu einer minimalen Fläche der Abscheideöffnung führt. In dieser Ebene, in der die Abscheideöffnung liegt, wird die Länge der längsten Ausdehnung der Abscheideöffnung bestimmt, so dass anschließend die kürzeste Länge der Abscheideöffnung gemessen werden kann, die senkrecht zur längsten Ausdehnung der Abscheideöffnung liegt. Diese kleinste Längenausdehnung kann hierin auch als Breite der Abscheideöffnung angesehen werden.

Die räumliche Form des Abscheidebereichs ist nicht kritisch und kann den Bedürfnissen angepasst werden. Hierbei wird vorzugsweise im Abscheidebereich eine Gasleiteinheit gebildet. Die Gasleiteinheit bewirkt eine Veränderung der Strömungsgeschwindigkeit eines Gases, so dass im Bereich der Einlassdüse eine geringere Gasgeschwindigkeit vorliegt als im Bereich der Abscheideöffnung. Da der Volumenstrom bei gleicher Aerosolzusammensetzung als konstant angesehen werden kann, bedeutet dies, dass dem Aerosol zunächst in einen relativ großen Raum geleitet wird, der anschließend verengt wird, so dass die Strömungsgeschwindigkeit zunimmt.

Demgemäß kann die Querschnittsfläche des Abscheidebereichs beispielsweise kreisförmig sein, wobei diese beispielsweise von Einlassdüse in Richtung Abscheideöffnung vorzugsweise keilförmig verengt wird. In einer bevorzugten Ausführungsform weist der Abscheidebereich keine kreisförmige Querschnittsfläche im Bereich der Einlassdüse auf, wobei der Abscheidebereich vorzugsweise mindestens drei Seitenwände umfasst, die zusammen mit einem oberen Abschluss einen Raum definieren, der über die Abscheideöffnung mit dem Trennbereich verbunden ist.

Der Gasausleitbereich dient zur Ableitung der Gasphase aus dem Gas-Flüssig-Abscheider, so dass dieser einen Gasauslass umfasst.

Vorzugsweise ist der Gasausleitbereich so ausgestaltet, dass die Gasgeschwindigkeit am Gasauslass maximal ist, vorzugsweise die Gasgeschwindigkeit in Gasflussrichtung vom Trennbereich in Richtung Gasauslass gesehen, zunimmt. Hierdurch kann ein Saugeffekt erzeugt werden, der zu einem sicheren und wartungsarmen Betrieb des Gas-Flüssig-Abscheiders führt. Ferner kann hierdurch das Volumen des Gas-Flüssig-Abscheiders verringert werden, ohne dass dessen Leistungsfähigkeit in anderen Eigenschaften, beispielsweise die Trenneigenschaften abnimmt.

In Umkehrung des Abscheidebereichs nimmt daher der Raum von Richtung Trennbereich hin zum Gasauslass ab. Vorzugsweise verjüngt sich demgemäß die Querschnittsfläche von Richtung Trennbereich hin zum Gasauslass.

Die Gasphase des Aerosols kann je nach Art des Gases aufgefangen und aufbereitet werden oder, beispielsweise bei Verwendung von CO₂ auch in die Umgebung freigesetzt werden.

Die Flüssigkeitsphase des Aerosols wird bevorzugt in einem Fraktionssammler gesammelt. Die gesammelten Fraktionen werden besonders bevorzugt automatisch als Hauptfraktionen gesammelt, während überschüssiges Lösungsmittel einer Aufbereitung oder einer Entsorgung unterworfen werden kann. Die Verbindungsleitung zwischen dem Flüssigauslass des Gas-Flüssig-Abscheiders und des Fraktionssammlers kann bevorzugt so ausgestaltet sein, dass Reste der Gasphase, vorzugsweise CO₂-Reste über diese Verbindung entweichen können. Hierfür kann ein semipermeables Kunststoffmaterial eingesetzt werden, beispielsweise Teflon, besonders bevorzugt AF 2400 (kommerziell erhältlich von DuPont).

Ein bevorzugtes Verfahren zum Betreiben eines Fraktionierungssammlers bei einer Chromatographie ist aus dem Stand der Technik, beispielsweise der Druckschrift WO 2019/048369 A1 mit der Anmeldenummer PCT/EP2018/073503 mit dem Anmeldedatum 03. September 2018 bekannt.

Ferner kann vorgesehen sein, dass die Chromatographie-Anlage eine Chromatographie-Anlagen-Steuerung umfasst, die in Wirkverbindung mit einem Detektor und einem Fraktionssammler steht. Vorzugsweise ist die Steuerung so programmierbar, dass die Menge an Flüssigkeit, die in ein Gefäß des Fraktionssammlers einleitbar ist, in Abhängigkeit des Anteils an dem ersten Lösungsmittel festlegbar ist.

Weiterhin kann vorgesehen sein, dass die Chromatographie-Anlage eine Chromatographie-Anlagen-Steuerung umfasst, die in Wirkverbindung mit der ersten Pumpe steht, wobei die Pumpleistung der ersten Pumpe über die Chromatographie-Anlagen-Steuerung steuerbar ist. Ferner kann die Chromatographie-Anlagen-Steuerung zusätzlich in Wirkverbindung mit der zweiten Pumpe stehen und deren Pumpleistung steuern.

Vorzugsweise ist die Chromatographie-Anlage als SFC-Anlage ausgestaltet, wobei eine Chromatographie mit einem Lösungsmittelgradienten durchführbar ist.

Die SFC-Chromatographie-Anlage ist vorzugsweise bei einem Volumenstrom im Bereich von 10 ml/min bis 450 ml/min, besonders bevorzugt im Bereich von 50 ml/min bis 300 ml/min und speziell bevorzugt 100 ml/min bis 250 ml/min betreibbar. Weiterhin kann vorgesehen sein, dass die SFC- Chromatographie-Anlage vorzugsweise bei einem Volumenstrom von mindestens 10 ml/min, besonders bevorzugt von mindestens 50 ml/min und speziell bevorzugt von mindestens 100 ml/min betreibbar ist.

Weiterhin kann die Chromatographie-Anlage als HPLC-Anlage ausgestaltet sein. Eine HPLC-Anlage unterscheidet sich unter anderem von einer SFC-Anlage dadurch, dass eine HPLC-Anlage keinen Rückdruckregler aufweist, der insbesondere in Flussrichtung gesehen nachfolgend eine Chromatographiesäule angeordnet ist. Ferner umfassen HPLC-Anlagen in Flussrichtung gesehen nach dem Rückdruckregler keinen Gas-Flüssig-Abscheider.

Je nach konkreter Ausgestaltung der umzubauenden Anlage werden unterschiedliche Komponenten benötigt. Im günstigsten Fall ist einer der Pumpen der HPLC-Anlage für den Betrieb mit einer kompressiblen Flüssigkeit, insbesondere mit flüssigem oder überkritischen CO₂ geeignet.

Ein weiterer Gegenstand der vorliegenden Erfindung ist ein Verfahren zur Durchführung einer Chromatographie umfassend den Einsatz einer erfindungsgemäßen Chromatographie-Anlage.

Vorzugsweise kann vorgesehen sein, dass beim Auftragen einer aufzutrennenden Probe auf die Chromatographiesäule das Mischerschaltventil in die zweite Position geschaltet ist und das Fluid um den Mischer geleitet wird.

Weiterhin kann vorgesehen sein, dass nach Auftragen einer aufzutrennenden Probe auf die Chromatographiesäule das Mischerschaltventil in die erste Position geschaltet ist und das Fluid durch den Mischer geleitet wird. Bei Vorgängen, die zur Vorbereitung der Anlage für eine Chromatographie dienen, beispielsweise zur Reinigung der Säule oder zur Temperierung derselben kann der Mischer vorzugsweise zugeschaltet sein.

In einer bevorzugten Ausführungsform kann vorgesehen sein, dass die zweite Position des Mischerschaltventils, bei der das Fluid um den Mischer geleitet wird, möglichst kurz gewählt wird. Dies bedeutet, dass die Zeitspanne, die zum Durchlauf einer Probe durch das Mischerschaltventil benötigt wird, möglichst genau vorherberechnet wird und das Mischerschaltventil entsprechend dieser Rechnung möglichst kurz in der zweiten Position gehalten wird. Bei dieser Berechnung sind unter anderem das Volumen zwischen der Zugabeeinheit und dem Mischerschaltventil, das Zugabevolumen der Probe als solches, das Volumen des Mischerschaltventils einschließlich des Fließwegs zur Umleitung des Mischers und der Volumenstrom zu berücksichtigen.

In einer Ausführungsform wird ein SFC-Verfahren durchgeführt. Hierzu kann vorgesehen sein, dass das Flüssigkeitsreservoir für ein erstes Fluid ein erstes Lösemittel enthält, das bei Normalbedingungen flüssig ist, und das Flüssigkeitsreservoir für ein zweites Fluid enthält, das bei Normalbedingungen gasförmig ist.

Im Hinblick auf den Begriff "SFC-Verfahren" beziehungsweise "überkritische Flüssigkeitschromatographie (SFC, Supercritical Fluid Chromatography)" ist festzuhalten, dass ein überkritischer Zustand nicht zwingend erreicht werden muss oder über den gesamten Verlauf einer Chromatographie aufrechtzuerhalten ist. Vielmehr bedeutet der Begriff Begriff "SFC-Verfahren" beziehungsweise "überkritische Flüssigkeitschromatographie (SFC, Supercritical Fluid Chromatography)", dass eine Chromatographie unter Verwendung einer komprimierbaren und leicht in einen überkritischen Zustand zu überführenden Substanz durchgeführt wird, die vorzugsweise bei Normalbedingungen gasförmig ist. Bei einem SFC-Verfahren wird vorzugsweise eine Lösungsmittelzusammensetzung

in eine Chromatographiesäule gepumpt wird, die zumindest einen Anteil an einem ersten Lösemittel enthält, das bei Normalbedingungen flüssig ist, und einen Anteil an einem zweiten Lösemittel enthält, das bei Normalbedingungen gasförmig ist. Es handelt sich hierbei vorzugsweise daher um eine SFC, wie diese zuvor und nachfolgend dargelegt wird. Normalbedingungen bedeuten 273,15 K = 0 °C und 1,01325 bar gemäß DIN 1343.

Zur Durchführung einer Trennung mit einem überkritischen Fluid wird ein anorganisches oder organisches Lösungsmittel eingesetzt, welches unter den üblichen Trennbedingungen, bevorzugt bei 25°C und Atmosphärendruck (101,325 kPa or 1013,25 mbar) flüssig ist. Hierbei kann ein polares oder unpolares Lösungsmittel eingesetzt werden, je nach Art der aufzutrennenden oder aufzureinigenden Verbindungen.

Diese Substanzen werden vorliegend insbesondere als erstes Lösemittel bezeichnet. Bevorzugt ist das erste Lösungsmittel ausgewählt aus Alkohol, vorzugsweise Methanol, Ethanol oder Propanol, Hexan, Mischungen mit Dichlormethan, Chloroform, Wasser (vorzugsweise bis max. 3 Vol%, da ansonsten eine Mischungslücke auftreten kann), ein Aldehyd oder ein Keton, vorzugsweise Methylethylketon; ein Ester, vorzugsweise Essigsäureethylester; oder ein Ether, vorzugsweise Tetrahydrofuran, ein aliphatischer Kohlenwasserstoff, vorzugsweise Hexan, Cyclohexan, Heptan, Octan; ein aromatischer Kohlenwasserstoff, vorzugsweise Benzol, Toluol, Xylol. Diese Verbindungen können einzeln oder als Mischung eingesetzt werden.

Ferner kann vorgesehen sein, dass bei einem erfindungsgemäßen Verfahren vorzugsweise ein Gas eingesetzt wird, welches relativ einfach in einen überkritischen Zustand versetzt werden kann. Zu den bevorzugten Gasen, die diese Eigenschaften aufweist gehören unter anderem Kohlendioxid (CO₂), Ammoniak (NH₃), Freon, Xenon, wobei Kohlendioxid (CO₂) besonders bevorzugt ist. Diese Substanzen werden vorliegend insbesondere als zweites Lösemittel bezeichnet.

Bevorzugt kann vorgesehen sein, dass das in den überkritischen Zustand zu bringende Gas-Flüssiggemisch ein polares Lösungsmittel und ein Gas umfasst, welches ausgewählt ist aus der Gruppe bestehend aus, CO₂, NH₃, Freon, Xenon, vorzugsweise CO₂. Vorzugsweise ist das polare Lösungsmittel ein Alkohol, vorzugsweise Methanol, Ethanol oder Propanol, Hexan, Mischungen mit Dichlormethan, Chloroform, Wasser (vorzugsweise bis max. 3 Vol%, da ansonsten eine Mischungslücke auftreten kann), ein Aldehyd oder ein Keton, vorzugsweise Methylethylketon; ein Ester, vorzugsweise Essigsäureethylester; oder ein Ether, vorzugsweise Tetrahydrofuran.

Ferner kann vorgesehen sein, dass das in den überkritischen Zustand zu bringende Gas-Flüssiggemisch ein unpolares Lösungsmittel und ein Gas umfasst, welches ausgewählt ist aus der Gruppe bestehend aus, CO₂, NH₃, Freon, Xenon, vorzugsweise CO₂. Vorzugsweise ist das unpolare Lösungsmittel ein aliphatischer Kohlenwasserstoff, vorzugsweise Hexan, Cyclohexan, Heptan, Octan; ein aromatischer Kohlenwasserstoff, vorzugsweise Benzol, Toluol, Xylol; ein Ester, vorzugsweise Essigsäureethylester; oder ein Ether, vorzugsweise Tetrahydrofuran.

Die aus der Chromatographiesäule fließende Zusammensetzung wird vorzugsweise zumindest teilweise in einen Detektor eingeleitet. Demgemäß wird vorzugsweise eine Überprüfung der entsprechenden Zusammensetzung nach der Chromatographiesäule vorgenommen. Detektoren, die hierfür eingesetzt werden können sind allgemein bekannt, wobei insbesondere Spektroskopieverfahren, bei denen elektromagnetische Wellen eingesetzt werden, wie beispielsweise UV-, VIS-Spektroskopie durchgeführt werden. Hierbei können auch weitere Verfahren zur Detektion eingesetzt werden, die beispielsweise die Lichtstreuung, die Fluoreszenz oder den Brechungsindex messen. Ferner werden vielfach Massenspektrometer und/oder Leitfähigkeitsdetektoren usw. eingesetzt.

Diese Verfahren können kontinuierlich oder chargenweise die Eigenschaften der aus der Chromatographiesäule fließende Zusammensetzung messen, so dass diese Detektoren diese Eigenschaften im Durchfluss oder durch Probenentnahme bestimmen können, wobei die letztere im Allgemeinen vollautomatisch und kontinuierlich erfolgt. Einzelheiten dieser Techniken sind aus dem Stand der Technik bekannt, wozu insbesondere auf Detektoren verwiesen wird, wie diese bei konventionellen HPLC-Verfahren eingesetzt werden.

Vorzugsweise wird eine das erste Lösungsmittel enthaltende Zusammensetzung nach dem Verlassen der Chromatographiesäule in Abhängigkeit des Detektorsignals in ein Sammelgefäß des Fraktionssammlers eingeleitet. Besonders bevorzugt kann vorgesehen sein, dass die Menge an Flüssigkeit, die in ein Sammelgefäß des Fraktionssammlers eingeleitet wird, in Abhängigkeit des Anteils an dem ersten Lösungsmittel gewählt wird.

Durch diese Maßnahme kann insbesondere erreicht werden, dass das Volumen eines Sammelgefäßes des Fraktionssammlers in überraschend guter Weise ausgenutzt werden kann. Hierdurch können insbesondere die zuvor dargelegten Kosten- und Handhabungsvorteile erzielt werden.

Weitere Kosten- und Handhabungsvorteile können dadurch erreicht werden, dass zumindest ein Teil der Zusammensetzung, die das erste Lösungsmittel enthält, nach dem Verlassen der Chromatographiesäule nicht in ein Sammelgefäß eingeleitet wird. Vorzugsweise werden Zusammensetzungen, die keine wertvolle Substanzen enthalten verworfen, wobei dies im Allgemeinen durch ein Steuerventil im Fraktionssammler bewirkt wird, der die zu verwerfenden Anteile der das erste Lösungsmittel enthaltenden Zusammensetzung nach dem Verlassen der Chromatographiesäule in einen Abfallbehälter oder ähnliches leitet.

In einer besonderen Ausgestaltung kann vorgesehen sein, dass die in eine Chromatographiesäule gepumpte Lösungsmittelzusammensetzung im Laufe der Chromatographie verändert wird.

Vorzugsweise wird der Anteil an erstem Lösungsmittel in der Lösungsmittelzusammensetzung im Laufe der Chromatographie erhöht und der Anteil an zweitem Lösungsmittel im Laufe der Chromatographie vermindert, wobei besonders bevorzugt der Anteil an erstem Lösungsmittel zu Beginn der Chromatographie mindestens 5 Vol.-%, speziell bevorzugt mindestens 10 Vol.-%, insbesondere speziell bevorzugt mindestens 20 Vol.-% unter dem Anteil an erstem Lösungsmittel zu Ende der Chromatographie liegt, bezogen auf die Lösungsmittelzusammensetzung. Demgemäß steigt vorzugsweise der Anteil an Lösungsmittel, welches bei Normalbedingungen flüssig ist, an, während der Anteil an Lösungsmittel, welches bei Normalbedingungen gasförmig ist, abnimmt. Durch diese Ausgestaltung kann überraschend eine Verkrustung in einem Gasabscheider, welcher in einer bevorzugten Ausgestaltung des Verfahrens eingesetzt wird, minimiert, vorzugsweise vollständig verhindert werden. Hierdurch kann die Trennqualität der Anlage beziehungsweise des Verfahrens überraschend verbessert werden.

Ferner kann vorgesehen sein, dass der Anteil an erstem Lösungsmittel im Bereich von 5 bis 95 Vol.-% und der Anteil an zweitem Lösungsmittel im Bereich von 5 bis 95 Vol.-% liegt, bezogen auf die Lösungsmittelzusammensetzung.

Bevorzugt kann vorgesehen sein, dass die Chromatographie bei einem Druck im Bereich von 5000 kPa bis 50000 kPa (50 bis 500 bar), vorzugsweise 7500 bis 40000 kPa (75 bis 400 bar) durchgeführt wird.

In einer bevorzugten Ausführungsform kann vorgesehen sein, dass die Chromatographie bei einer Temperatur im Bereich von 20°C bis 80°C, vorzugsweise 35°C bis 60°C durchgeführt wird.

In einer bevorzugten Ausführungsform kann vorgesehen sein, dass das zweite Lösungsmittel, welches in der Zusammensetzung nach der Chromatographiesäule enthalten ist, vor dem Einleiten in den Fraktionssammler zumindest teilweise abgetrennt wird. Hierdurch kann überraschend eine wesentliche Verbesserung der Wirtschaftlichkeit erzielt werden, da ein Teil des Lösungsmittels vor dem Fraktionssammler abgetrennt und hierdurch bei gleichem Volumen der Sammelgefäße seltener ein Wechsel der Sammelgefäße vorgenommen werden muss.

Der Gas-Flüssig-Abscheider kann im Allgemeinen bei atmosphärischem Druck betrieben werden. Um jedoch eine Ansammlung von größeren Mengen an Flüssigkeit zu vermeiden, z.B. von Methanol kann der Gas-Flüssigkeits-Abscheider bei einem mäßigen inneren Gegendruck von beispielsweise im Bereich von 10 bis 2500 kPa (0,1 bar bis 25 bar) von einem Rückdruckregler betrieben werden. Demgemäß kann vorgesehen sein, dass die Chromatographie-Anlage nach dem Gasauslass ein Rückdruckregler vorgesehen ist, der vorzugsweise im Bereich von bis 2500 kPa (1 bis 25 bar) Überdruck (Absolutdruck 200 bis 2100 kPa (2 bar bis 21 bar)), vorzugsweise 200 bis 1500 kPa (2 bar bis 15 bar) Überdruck regelbar ist. Die über den Trennbereich gesammelte und durch den Flüssigkeitsauslasskanal bereitgestellte Flüssigkeitskomponente ermöglicht jedoch eine automatisierte Fraktionierung, die unter atmosphärischem Druck betrieben werden kann. Mit Hilfe des Gas-Flüssigkeits-Abscheiders und vergleichbar mit konventioneller HPLC-Analyse kann auch für die SFC-Analyse eine vollautomatische Fraktionssammlung realisiert werden

Demgemäß kann vorgesehen sein, dass ein Gas-Flüssig-Abscheider eingesetzt wird, wobei der Druck im Gas-Flüssig-Abscheider bevorzugt im Bereich von 10 kPa bis 2500 kPa (0,1 bis 25 bar), vorzugsweise 5 bis 2000 kPa (0,5 bis 20 bar) und besonders bevorzugt 100 bis 1500 kPa (1 bis 15 bar) liegt (Überdruck).

Durch diese Ausgestaltung können weitere überraschende Verbesserungen erzielt werden. Insbesondere wird die Laufzeit zwischen dem Entspannen des Lösungsmittelgemischs und dem Auslass des Gas-Flüssig-Abscheider im Wesentlichen durch den Druckabfall bestimmt. Das im kleinen Volumen entstehende Gas bewirkt einen hohen Druck, der für die Laufzeit bestimmend ist. Die relative Konstanz dieses Druckes, führt zu einer hohen Signalintegrität, da die Laufzeit auch nach dem Entspannen bei der Verwendung eines geeigneten Gas-Flüssig-Abscheiders im Wesentlichen konstant bleibt. Demgemäß kann insbesondere bei Verwendung eines Gas-Flüssig-Abscheiders, der bevorzugt bei einem Überdruck betrieben werden kann, auf eine Zudosierung von Lösungsmittel verzichtet werden, wie diese gemäß dem bisherigen Stand der Technik eingesetzt wurde, um eine Signalintegrität zu gewährleisten. Hierbei ist festzuhalten, dass eine absolute Konstanz des Gasdrucks im Gas-Flüssig-Abscheider nicht notwendig ist, da die Laufzeit auch bei relativ kleinen Drücken sehr kurz ist, so dass Schwankungen keine wesentlichen Auswirkungen auf die Signalintegrität haben, da diese einer üblichen Schwankung aufgrund von Fehlertoleranzen unterliegt. So führen Druckschwankungen im Bereich von 10 kPa bis 2500 kPa (0,1 bar bis 25 bar) im Gas-Flüssig-Abscheider zu zweckmäßigen Ergebnissen. Bevorzugte Ausführungsformen von geeigneten Gas-Flüssig-Abscheidern sind zuvor und nachfolgend beschrieben, wobei hierauf Bezug genommen wird.

In einer bevorzugten Ausführungsform des Verfahren, bei dem die Chromatographie-Anlage ein Rückdruckregler umfasst, durch welchen der Druck in dem Gas-Flüssig-Abscheiders regelbar ist, kann vorgesehen sein, dass die Regelung des Drucks in Abhängigkeit vom Lösungsmittelgehalt des Gas-Flüssiggemischs gewählt wird, vorzugsweise kann die Regelung so ausgestaltet sein, dass bei einem hohen Lösungsmittelgehalt ein hoher Druck im Gas-Flüssig-Abscheider vorgesehen ist.

Vorzugsweise kann vorgesehen sein, dass die Fraktionierung bei einem geringeren Druck betrieben wird als der Gas-Flüssig-Abscheider, wobei vorzugsweise der Druckunterschied im Bereich von 10 bis 2500 kPa, vorzugsweise 50 bis 2000 kPa (0,1 bis 25 bar, vorzugsweise 0,5 bis 20 bar) und besonders bevorzugt 100 bis 1500 kPa (1 bis 15 bar) liegt. Bevorzugt wird die Fraktionierung bei einem Druck im Bereich von 0 bis 100 kPa (0 bis 1 bar) durchgeführt (Überdruck), besonders bevorzugt 0 bis 50 kPa (0 bis 0,5 bar), speziell bevorzugt 0 bis 20 kPa (0 bis 0,2 bar). Die zuvor dargelegten Druckwerte beziehen sich auf Überdruck, wobei dieser Druck, der relativ zum Atmosphärendruck bzw. Luftdruck gemessen wird.

Die Detektion einer zu sammelnden Fraktion kann auf übliche Weise festgelegt werden, die im Allgemeinen auch bei verwandten Chromatographieverfahren eingesetzt werden. Hierzu gehört beispielsweise, dass eine Fraktion bei einer bestimmten Signalhöhe des Detektors, beispielsweise eines UV/VIS-Detektors gesammelt wird. Ferner kann eine Fraktion auch aufgrund einer bestimmten Form des Signals gesammelt werden, beispielsweise der vorgegebenen Änderung der Steigung des Detektorsignals oder einem bestimmten Wert der Steigung des Detektorsignals.

Ferner kann vorgesehen sein, dass die Chromatographie bei einer Flussrate im Bereich von 10 ml/min bis 450 ml/min, besonders bevorzugt im Bereich von 50 ml/min bis 300 ml/min und speziell bevorzugt 100 ml/min bis 250 ml/min durchgeführt wird. Diese Flussrate stellt die Gesamtflussrate dar. Die Flussrate der einzelnen Lösungsmittel, insbesondere des ersten beziehungsweise des zweiten Lösungsmittels, welche jeweils als Gemisch eingesetzt werden, ergibt sich aus dem jeweiligen Volumenanteil.

Ferner kann vorgesehen sein, dass der Fraktionssammler über eine Steuerungseinheit gesteuert wird und die Steuerungseinheit mit dem Detektor in Wirkverbindung steht, wobei bei Detektion einer Substanz durch den Detektor ein Steuerimpuls an den Fraktionssammler geleitet wird, der einen Wechsel des Sammelgefäßes bewirkt.

In einer weiteren Ausführungsform kann vorgesehen sein, dass der Fraktionssammler über eine Steuerungseinheit gesteuert wird und die Steuerungseinheit mit dem Detektor in Wirkverbindung steht, wobei nach Beendigung der Detektion einer Substanz durch den Detektor ein Steuerimpuls an den Fraktionssammler geleitet wird, der einen Wechsel des Sammelgefäßes bewirkt. Diese Ausgestaltung ist gegenüber der Ausführungsform, bei der zu Beginn ein Wechsel des Sammelgefäßes bewirkt wird, bevorzugt.

Nachfolgend sollen bevorzugte Ausführungsformen der vorliegenden Erfindung anhand von vier Figuren beispielhaft beschrieben werden, ohne dass hierdurch eine Begrenzung der Erfindung erfolgen soll. Es zeigen:
- Figur 1: eine schematische Darstellung einer Chromatographie-Anlage,
- Figur 2: eine schematische Darstellung einer bevorzugt einsetzbaren Zugabeeinheit in einer ersten Schaltposition,
- Figur 3: eine schematische Darstellung einer bevorzugt einsetzbaren Zugabeeinheit in einer zweiten Schaltposition,
- Figur 4: eine schematische Darstellung eines bevorzugt einsetzbaren Mischerschaltventils in einer ersten Schaltposition,
- Figur 5: eine schematische Darstellung eines bevorzugt einsetzbaren Mischerschaltventils in einer zweiten Schaltposition,
- Figur 6: eine schematische Darstellung eines Ausschnitts einer Chromatographie-Anlage, wobei sich eine bevorzugt einsetzbare Zugabeeinheit in einer zweiten Schaltposition und ein bevorzugtes Mischerschaltventil in einer ersten Schaltposition befindet,
- Figur 7: eine schematische Darstellung eines Ausschnitts einer Chromatographie-Anlage, wobei sich eine bevorzugt einsetzbare Zugabeeinheit in einer zweiten Schaltposition und ein bevorzugtes Mischerschaltventil in einer zweiten Schaltposition befindet,
- Figur 8: eine schematische Darstellung eines Ausschnitts einer Chromatographie-Anlage, wobei sich eine bevorzugt einsetzbare Zugabeeinheit in einer ersten Schaltposition und ein bevorzugtes Mischerschaltventil in einer zweiten Schaltposition befindet,
- Figur 9: eine schematische Darstellung eines Ausschnitts einer Chromatographie-Anlage, wobei sich eine bevorzugt einsetzbare Zugabeeinheit in einer ersten Schaltposition und ein bevorzugtes Mischerschaltventil in einer ersten Schaltposition befindet,
- Figur 10: eine schematische Darstellung einer als SFC-Anlage ausgestaltete Chromatographie-Anlage.

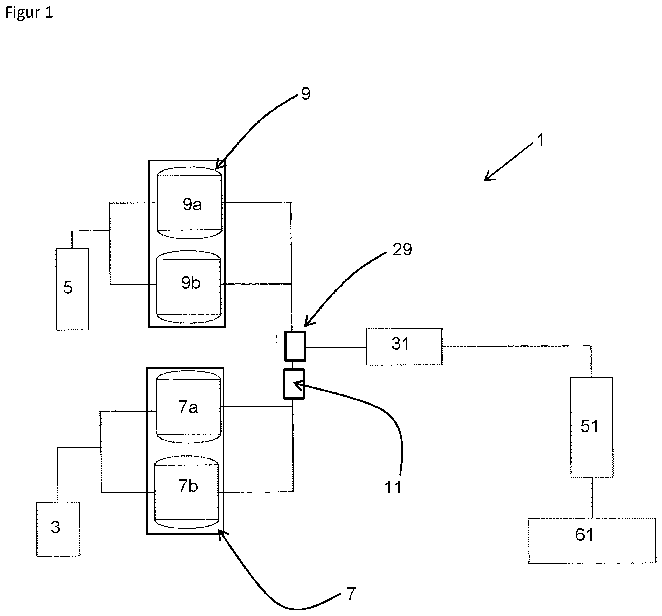

Figur 1 zeigt in schematischer Darstellung eine Chromatographie-Anlage 1, wie diese beispielsweise als HPLC-Anlage ausgestaltet sein kann.

Eine geeignete Chromatographie-Anlage 1 umfasst zwei Fluidströme, wobei ein erstes Fluid durch ein erstes Flüssigkeitsreservoir 3 und ein zweites Fluid durch ein zweites Flüssigkeitsreservoir 5 bereitgestellt wird. Das erste Fluid wird vom Flüssigkeitsreservoir 3 durch eine Pumpe 7, die vorliegend zwei Kolben 7a, 7b umfasst, in ein Verbindungsstück 29 überführt. In Flussrichtung gesehen ist vor dem Verbindungsstück 29 eine Zugabeeinheit 11 vorgesehen, wobei diese in der vorliegenden Ausführungsform nach der Pumpe 7 angeordnet ist. In einer weiteren Ausführungsform kann die Zugabeeinheit 11 auch vor der der Pumpe 7 angeordnet sein.

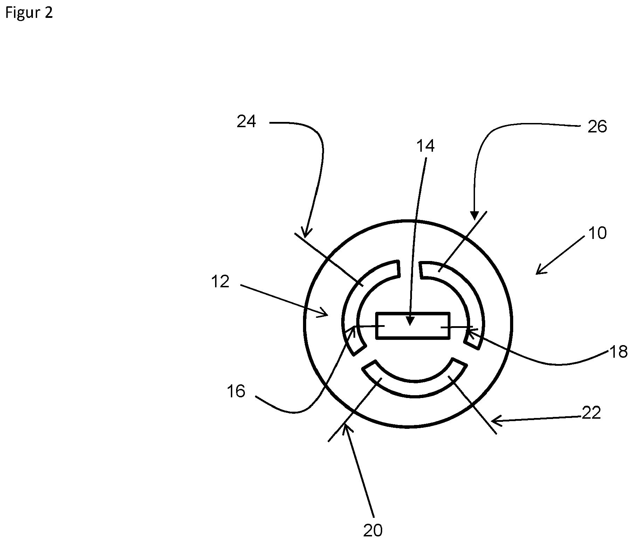

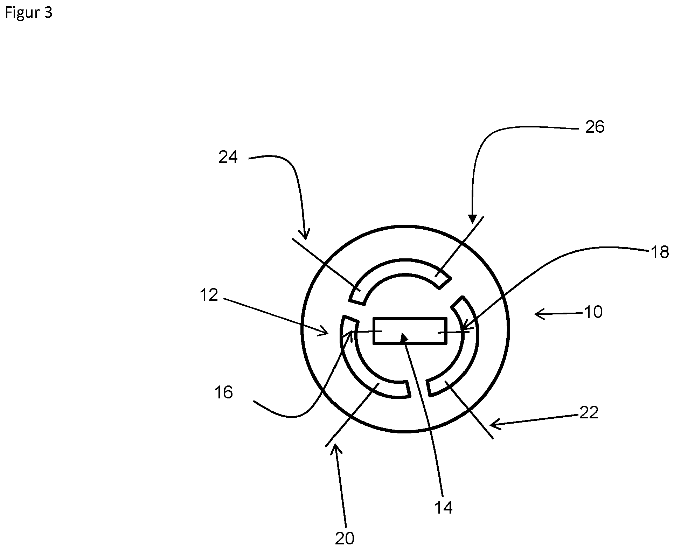

Eine bevorzugte Ausführungsform einer Zugabeeinheit 11 wird in Figuren 2 und 3 dargelegt.

Das zweite Fluid wird vom Flüssigkeitsreservoir 5 durch eine Pumpe 9, die vorliegend zwei Kolben 9a, 9b umfasst, in das zuvor dargelegte Verbindungsstück 29 überführt, so dass nach dem Verbindungsstück 29 eine Zusammensetzung vorliegt, die durch einen in Flussrichtung gesehen nach dem Verbindungsstück 29 angeordneten Mischer 31 gemischt wird, falls der Mischer zugeschaltet ist. Der Mischer ist über ein aus Gründen der Übersichtlichkeit nicht dargestelltes Mischerschaltventil schaltbar, so dass in einer ersten Position der Mischer 31 zuschaltbar ist und in einer zweiten Position der Mischer 31 umleitbar ist.

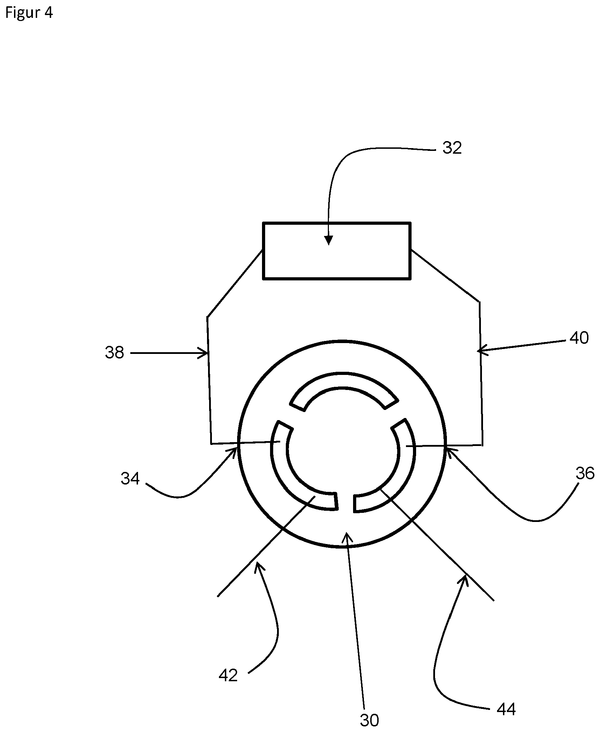

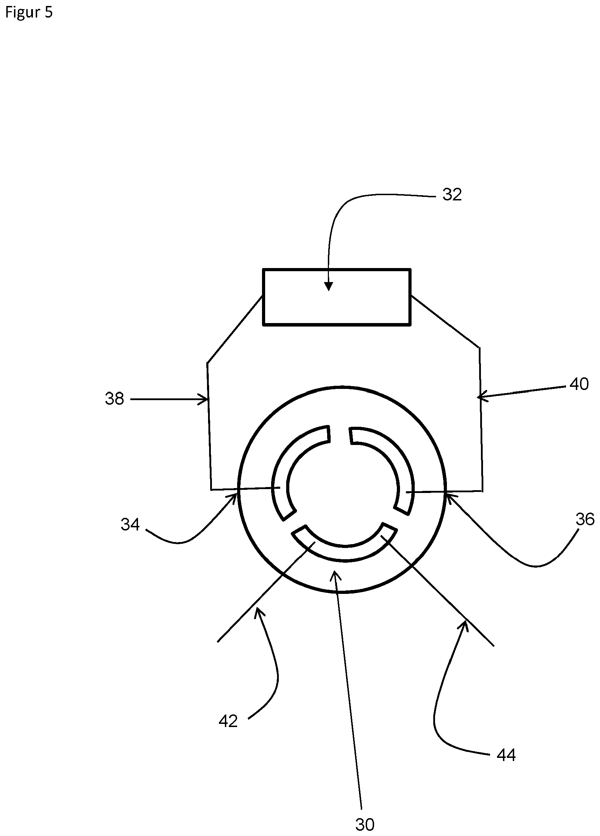

Eine bevorzugte Ausführungsform eines Mischerschaltventils, welches mit einem Mischer verbunden ist, wird in Figuren 4 und 5 dargelegt.

In der vorliegenden Chromatographie-Anlage 1 ist nach dem Verbindungsstück 29 und dem Mischer 31 eine Chromatographiesäule 51 nachgeschaltet. Nach der Chromatographiesäule 51 ist vorliegend vorzugsweise ein Fraktionssammler 61 vorgesehen.

Der Fraktionssammler 61 kann über ein oder mehrere, vorliegend nicht dargestellte Steuerungseinheiten gesteuert werden, wobei diese Steuerungseinheiten in Wirkverbindung mit einem oder mehreren Detektoren stehen. Die Detektoren sind, in Flussrichtung gesehen zwischen Chromatographiesäule 51 und Fraktionssammler 61 geschaltet.

Im Allgemeinen ist sich das Mischerschaltventil in die erste Position geschaltet ist und das Fluid wird durch den Mischer geleitet. Dies gilt insbesondere während der eigentlichen Trennung der Probenzusammensetzung.

Zur Auftragung einer aufzutrennenden Probe auf die Chromatographiesäule das Mischerschaltventil in die zweite Position geschaltet ist und das Fluid um den Mischer geleitet wird.

Figur 2 beschreibt eine bevorzugt einsetzbare Zugabeeinheit 10 in einer schematischen Darstellung in einer ersten Schaltposition.

Die in Figur 2 dargestellte Zugabeeinheit 10 umfasst ein Injektionsventil 12 und eine Probeschleife 14. Das in Figur 2 dargestellte Injektionsventil 12 umfasst 6 Ports (16, 18, 20, 22, 24, 26), wobei zwei Ports als Probenschleifen-Ports (16, 18), zwei Ports (20, 22) als Hochdruck-Ports für das Zuführen und Abführen von unter hohem Druck stehendem Fluid sowie zwei Ports (24, 26) als Ports für das Zu- und Ausleiten von Probenzusammensetzung und/oder Fluid in und aus der Probenschleife ausgestaltet sind. Hierbei sind die Ports 16 und 18 mit der Probeschleife 14 verbunden und als Probenschleifenports ausgestaltet. Die Ports 20 und 22 dienen als Hochdruck-Ports für das Zuführen und Abführen von unter hohem Druck stehendem Fluid. Über die Ports 24 und 26 kann eine Probe in die Probeschleife 14 eingebracht und Fluid aus der Probenschleife ausgeleitet werden. Diese Ports 24, 26 dienen als Injektionsbeziehungsweise Waste-Port. In der vorliegenden Ausführungsform ist Port 20 in Fließverbindung mit einem Flüssigkeitsreservoir für ein erstes Fluid verbindbar oder verbunden und Port 22 mit einem Verbindungsstück, wobei das Flüssigkeitsreservoir für ein erstes Fluid und das Verbindungsstück nicht in Figur 2 dargestellt sind.

In der ersten Schaltposition kann eine Probe in die Probeschleife 14 eingebracht werden, wobei dies über Port 24 mittels einer Spritze oder eine Pumpe erfolgen kann, wie dies aus dem Stand der Technik bekannt ist. Die Probeschleife 14 kann durch einen Überdruck oder einen Unterdruck mit einer Probe beschickt werden. Beispielsweise kann diese durch Injektion befüllt werden. Ferner kann ein Probengefäß vor der Probenschleife 14 angeordnet sein und nach der Probenschleife ein Abfallgefäß, wobei zwischen Probenschleife 14 und Abfallgefäß eine Pumpe, beispielsweise eine Schlauch- oder eine Zahnradpumpe angeordnet ist, die aus dem Probengefäß eine Probe ansaugt und in die Probenschleife 14 überführt. Fluid, welches sich vor der Probeneinspeisung in der Probenschleife befindet, wird hierbei über Port 26 in ein nicht gezeigtes Abfallgefäß überführt. Dieses Fluid besteht im Wesentlichen vorzugsweise aus dem ersten Lösungsmittel.

Figur 3 beschreibt eine bevorzugt einsetzbare Zugabeeinheit 10 in einer schematischen Darstellung in einer zweiten Schaltposition. Wie in Figur 2 beschrieben umfasst die Zugabeeinheit 10 ein Injektionsventil 12 und eine Probeschleife 14, wobei das Injektionsventil 12 sechs Ports (16, 18, 20, 22, 24, 26) umfasst, die in Figur 2 näher beschrieben sind.

In Figur 3 befindet die Zugabeeinheit 10 in einer zweiten Schaltposition, in der eine Probe aus der Probeschleife 14 auf eine Chromatographiesäule aufgetragen wird. In dieser Schaltposition ist die Probeschleife 14 in den Fließweg zwischen einem Flüssigkeitsreservoir für ein erstes Fluid und einem Verbindungsstück geschaltet. In dieser Schaltposition des Injektionsventils 12 wird ein Fluid aus einem ersten Flüssigkeitsreservoir über Port 20 beziehungsweise Port 16 in die Probenschleife 14 eingeleitet und über Port 18 beziehungsweise Port 22 in ein Verbindungsstück ausgeleitet.

Figur 4 beschreibt ein bevorzugt einsetzbares Mischerschaltventil 30 in einer ersten Schaltposition. Der in Figur 4 dargelegte Mischer 32 ist mit dem Mischerschaltventil 30 über die Ports 34 und 36 und den Leitungen 38 und 40 verbunden. Die Ports 42 und 44 dienen als Hochdruck-Ports für das Zuführen und Abführen von unter hohem Druck stehendem Fluid. In der vorliegenden Ausführungsform steht Port 42 in Fließverbindung mit einem Verbindungsstück und Port 44 mit einer Chromatographiesäule, wobei das Verbindungsstück und die Chromatographiesäule nicht in Figur 4 dargestellt sind

Das in Figur 4 beschriebene Mischerschaltventil 30 weist zwei Schaltpositionen auf, wobei in der gezeigten ersten Position der Mischer 32 zugeschaltet ist, so dass ein Fluid oder eine Fluidmischung von einem Verbindungsstück über den Mischer 32 in eine Chromatographiesäule geleitet wird.

Figur 5 beschreibt ein bevorzugt einsetzbares Mischerschaltventil 30 in einer zweiten Schaltposition. Der in Figur 5 dargelegte Mischer 32 ist mit dem Mischerschaltventil 30 über die Ports 34 und 36 und den Leitungen 38 und 40 verbunden. Die Ports 42 und 44 dienen als Hochdruck-Ports für das Zuführen und Abführen von unter hohem Druck stehendem Fluid. In der vorliegenden Ausführungsform steht Port 42 in Fließverbindung mit einem Verbindungsstück und Port 44 mit einer Chromatographiesäule, wobei das Verbindungsstück und die Chromatographiesäule nicht in Figur 5 dargestellt sind.

Das in Figur 5 beschriebene Mischerschaltventil 30 weist zwei Schaltpositionen auf, wobei in der gezeigten zweiten Position der Mischer 32 umgeleitet ist, so dass ein Fluid oder eine Fluidmischung von einem Verbindungsstück nicht über den Mischer 32, sondern direkt in eine Chromatographiesäule geleitet wird.

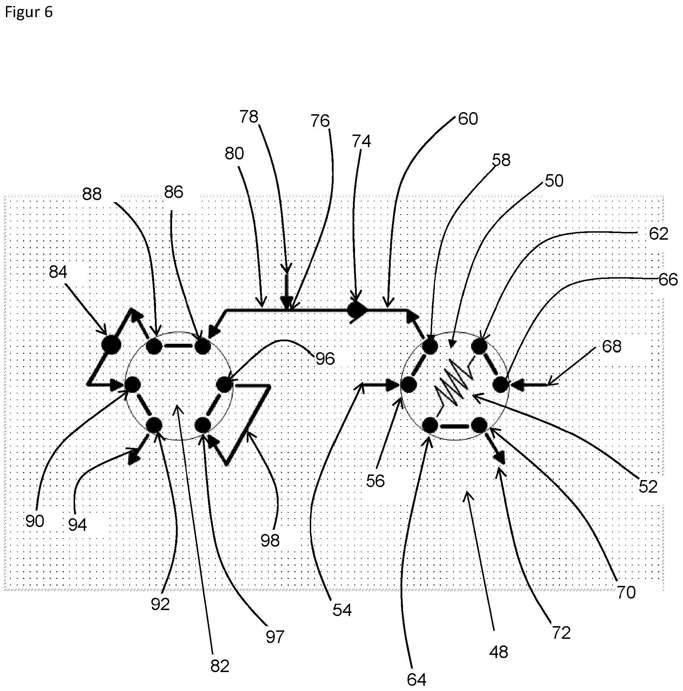

Figur 6 zeigt eine schematische Darstellung eines Ausschnitts einer Chromatographie-Anlage, wobei sich eine bevorzugt einsetzbare Zugabeeinheit 48 in einer zweiten Schaltposition und ein bevorzugtes Mischerschaltventil 82 in einer ersten Schaltposition befindet.

Die Zugabeeinheit 48 umfasst ein Injektionsventil 50 und eine Probeschleife 52. Das in Figur 6 dargestellte Injektionsventil 50 umfasst 6 Ports (56, 58, 62, 64, 66, 70). Die Zugabeeinheit 48 beziehungsweise das Injektionsventil 50 ist so geschaltet, dass eine Probe in die Probenschleife 52 eingeleitet werden kann. Hierzu kann eine Probe über Probenzuleitung 68, die mit dem Port 66 für das Zuleiten von Probenzusammensetzung und/oder Fluid in und aus der Probenschleife verbunden ist, in die Probenschleife 52 zugeführt werden. Die Probenschleife 52 ist mit dem Injektionsventil 50 über Ports 62 und 64 verbunden. Die Probeschleife 52 kann durch einen Überdruck oder einen Unterdruck mit einer Probe beschickt werden. Beispielsweise kann diese durch Injektion befüllt werden. Ferner kann ein Probengefäß vor der Probenschleife 52 angeordnet sein und nach der Probenschleife ein Abfallgefäß, wobei zwischen Probenschleife 52 und Abfallgefäß eine Pumpe, beispielsweise eine Schlauch- oder eine Zahnradpumpe angeordnet ist, die aus dem Probengefäß eine Probe ansaugt und in die Probenschleife 52 überführt. Fluid, welches sich vor der Probeneinspeisung in der Probenschleife befindet, wird hierbei über Port 70 und Leitung 72 in ein nicht gezeigtes Abfallgefäß überführt. Dieses Fluid besteht im Wesentlichen vorzugsweise aus dem ersten Lösungsmittel.

In der zweiten Schaltstellung der Zugabeeinheit 48 beziehungsweise des Injektionsventils 50 wird Fluid über zwei Hochdruck-Ports 56, 58 für das Zuführen und Abführen von unter hohem Druck stehendem Fluid von einem Flüssigkeitsreservoir für ein erstes Fluid über Leitung 54 in Leitung 60 überführt. In Leitung 60 ist ein Rückschlagventil 74 vorgesehen. Die Leitung 60 ist mit einem Verbindungsstück 76 verbunden, welches weiterhin mit einer Zuleitung 78 für ein zweites Fluid verbunden ist. Die gemeinsame Auslassleitung 80 ist über Port 86 mit einem Mischerschaltventil 82 verbunden. Das Mischerschaltventil 82 ist über Ports 88 und 90 mit einem Mischer 84 verbunden und über Port 92 mit einer Leitung 94, die in eine Chromatographiesäule führt, wobei die Chromatographiesäule nicht in Figur 6 dargestellt ist. Das Mischerschaltventil 82 befindet sich in Fig. 6 in einer ersten Schaltposition, bei welcher ein Fluid oder eine Fluidmischung vom Verbindungsstück 76 über den Mischer 84 in eine Chromatographiesäule geleitet wird.

In der vorliegenden Ausführungsform ist das Mischerschaltventil 82 über Ports 96 und 97 mit einer Umleitschleife 98 verbunden.

In der in Fig. 6 dargelegten Ausgestaltung kann beispielsweise die nicht dargestellte Chromatographiesäule mit einer geeigneten Fluidmischung äquilibriert werden, bevor eine Probe aufgetragen wird.

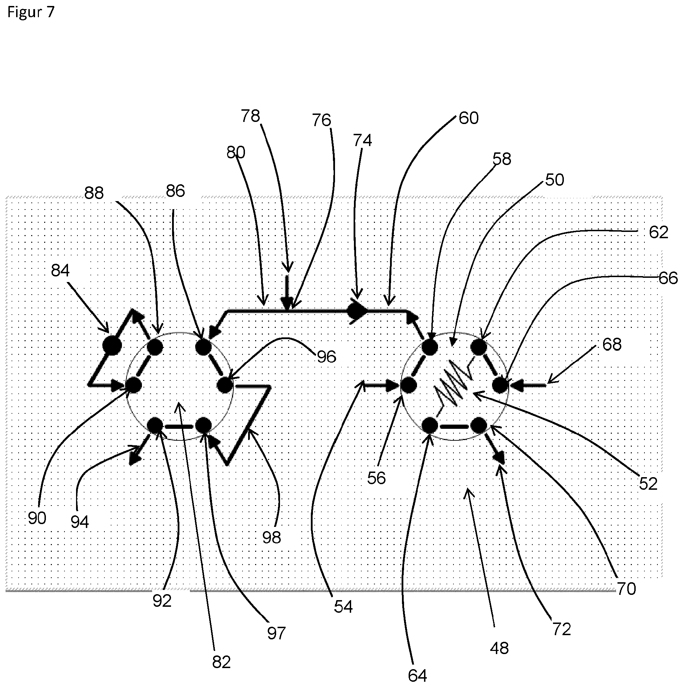

Figur 7 zeigt eine schematische Darstellung eines Ausschnitts einer Chromatographie-Anlage, wobei sich eine bevorzugt einsetzbare Zugabeeinheit 48 in einer zweiten Schaltposition und ein bevorzugtes Mischerschaltventil 82 in einer zweiten Schaltposition befindet.

Der in Figur 7 dargestellte Ausschnitt entspricht daher in vielen Einzelheiten dem in Figur 6 dargestellten, wobei gleiche Bezugszeichen identische Bestandteile bezeichnen, so dass die in Bezug auf Figur 6 ausgeführten Darlegungen auch für Fig.7 Geltung haben.

Wie in Figur 6 beschrieben umfasst die Zugabeeinheit 48 ein Injektionsventil 50 und eine Probeschleife 52, wobei das Injektionsventil 50 sechs Ports (56, 58, 62, 64, 66, 70) umfasst, die in Figur 6 näher beschrieben sind. Die Stellung der Zugabeeinheit 48 beziehungsweise des Injektionsventils 50 ist in Fig. 6 beschrieben, so dass hierauf verwiesen wird, um Wiederholungen zu vermeiden.

Über Leitung 60 und dem Verbindungsstück 76 wird ein Fluid in das Mischerschaltventil 82 geleitet, wobei Einzelheiten des Mischerschaltventils 82, insbesondere dessen Verbindung mit dem Mischer 84 und der Umleitschleife in Fig. 6 beschrieben sind.

Das Mischerschaltventil 82 befindet sich in Fig. 7 in einer zweiten Schaltposition, bei welcher ein Fluid oder eine Fluidmischung vom Verbindungsstück 76 nicht in den Mischer 84, sondern über die Umleitschleife 98 in eine Chromatographiesäule geleitet wird.

Die in Fig. 7 dargelegte Ausgestaltung kann beispielsweise kurz vor Auftragung einer Probe eingenommen werden, um eine Umleitung des Mischers 84 sicherzustellen.

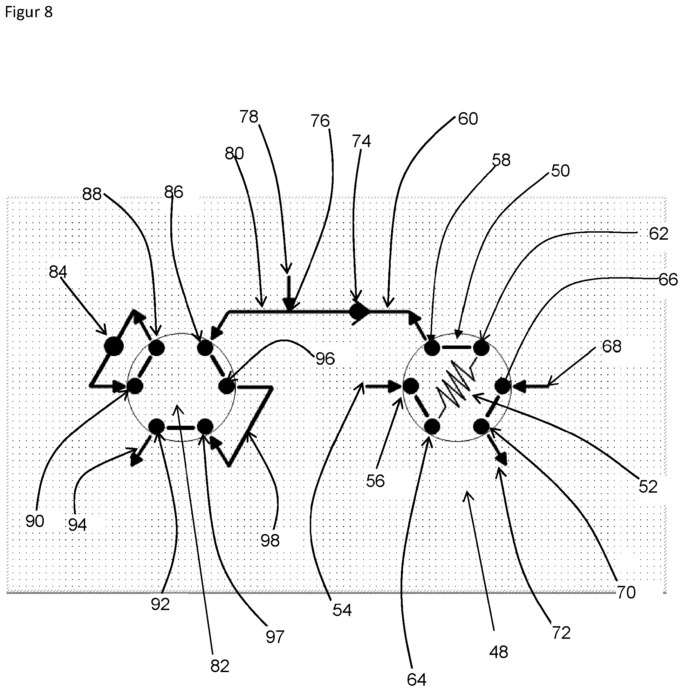

Figur 8 zeigt eine schematische Darstellung eines Ausschnitts einer Chromatographie-Anlage, wobei sich eine bevorzugt einsetzbare Zugabeeinheit in einer ersten Schaltposition und ein bevorzugtes Mischerschaltventil in einer zweiten Schaltposition befindet.

Der in Figur 8 dargestellte Ausschnitt entspricht daher in vielen Einzelheiten dem in Figuren 6 und 7 dargestellten, wobei gleiche Bezugszeichen identische Bestandteile bezeichnen, so dass die in Bezug auf Figuren 6 und 7 ausgeführten Darlegungen auch für Fig.8 Geltung haben.

Wie in Figur 6 oder 7 beschrieben umfasst die Zugabeeinheit 48 ein Injektionsventil 50 und eine Probeschleife 52, wobei das Injektionsventil 50 sechs Ports (56, 58, 62, 64, 66, 70) umfasst, die in Figur 6 näher beschrieben sind.

In Fig. 8 befindet sich die Zugabeeinheit 48 in einer zweiten Schaltposition, in der eine Probe aus der Probeschleife 52 auf eine Chromatographiesäule aufgetragen wird. In dieser Schaltposition ist die Probeschleife 52 in den Fließweg zwischen einem Flüssigkeitsreservoir für ein erstes Fluid und dem Verbindungsstück 76 geschaltet. In dieser Schaltposition des Injektionsventils 50 wird ein Fluid aus einem ersten Flüssigkeitsreservoir über Port 56 beziehungsweise Port 64 in die Probenschleife 52 eingeleitet und über Port 62 beziehungsweise Port 58 in das Verbindungsstück 76 ausgeleitet.

Über Leitung 60 und dem Verbindungsstück 76 wird ein Fluid in das Mischerschaltventil 82 geleitet, wobei Einzelheiten des Mischerschaltventils 82, insbesondere dessen Verbindung mit dem Mischer 84 und der Umleitschleife in Fig. 6 beschrieben sind.

Das Mischerschaltventil 82 befindet sich in Fig. 8 in einer zweiten Schaltposition, bei welcher ein Fluid oder eine Fluidmischung vom Verbindungsstück 76 nicht in den Mischer 84, sondern über die Umleitschleife 98 in eine Chromatographiesäule geleitet wird.

Die in Fig. 8 dargelegte Ausgestaltung wird beim Auftragen einer Probe eingenommen, um eine Umleitung des Mischers 84 sicherzustellen.

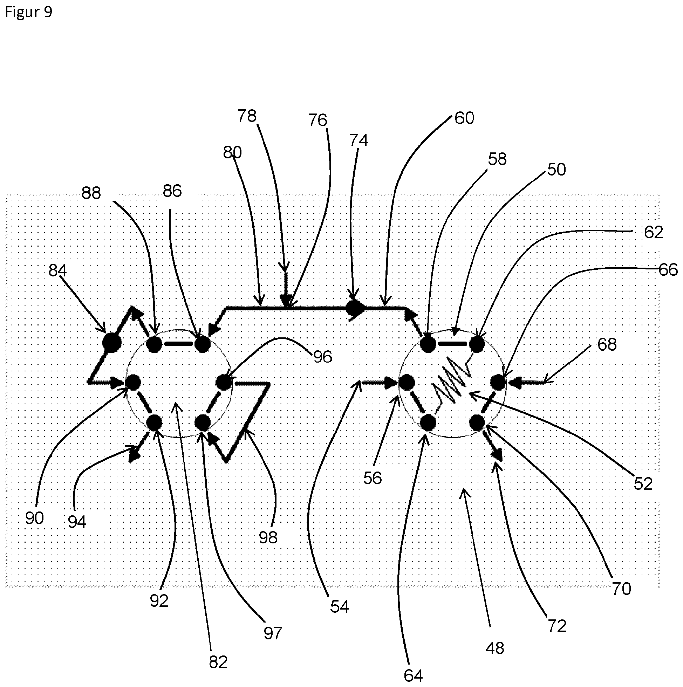

Figur 9 zeigt eine schematische Darstellung eines Ausschnitts einer Chromatographie-Anlage, wobei sich eine bevorzugt einsetzbare Zugabeeinheit in einer ersten Schaltposition und ein bevorzugtes Mischerschaltventil in einer ersten Schaltposition befindet.

Der in Figur 9 dargestellte Ausschnitt entspricht daher in vielen Einzelheiten dem in Figuren 6, 7 und 8 dargestellten, wobei gleiche Bezugszeichen identische Bestandteile bezeichnen, so dass die in Bezug auf Figuren 6, 7 und 8 ausgeführten Darlegungen auch für Fig. 9 Geltung haben.

Wie in Figur 6, 7 oder 8 beschrieben umfasst die Zugabeeinheit 48 ein Injektionsventil 50 und eine Probeschleife 52, wobei das Injektionsventil 50 sechs Ports (56, 58, 62, 64, 66, 70) umfasst, die in Figur 6 näher beschrieben sind.

In Fig. 9 befindet sich die Zugabeeinheit 48 in einer zweiten Schaltposition, in der eine Probe aus der Probeschleife 52 auf eine Chromatographiesäule aufgetragen wird. In dieser Schaltposition ist die Probeschleife 52 in den Fließweg zwischen einem Flüssigkeitsreservoir für ein erstes Fluid und dem Verbindungsstück 76 geschaltet. In dieser Schaltposition des Injektionsventils 50 wird ein Fluid aus einem ersten Flüssigkeitsreservoir über Port 56 beziehungsweise Port 64 in die Probenschleife 52 eingeleitet und über Port 62 beziehungsweise Port 58 in das Verbindungsstück 76 ausgeleitet.

Über Leitung 60 und dem Verbindungsstück 76 wird ein Fluid in das Mischerschaltventil 82 geleitet, wobei Einzelheiten des Mischerschaltventils 82, insbesondere dessen Verbindung mit dem Mischer 84 und der Umleitschleife in Fig. 6 beschrieben sind.

Das Mischerschaltventil 82 befindet sich in Fig. 9 in einer ersten Schaltposition, bei welcher ein Fluid oder eine Fluidmischung vom Verbindungsstück 76 über den Mischer 84 in eine Chromatographiesäule geleitet wird.

Die in Fig. 9 dargelegte Ausgestaltung wird nach Durchleiten der aufzutragenden Probe durch das Mischerschaltventil 82 eingenommen, wobei diese Stellung nach Möglichkeit unmittelbar nach der Passage der aufzutragenden Probe geschaltet wird. Weiterhin kann bei der eigentlichen Trennung, d. h. nach Auftragung der Probe die in Fig. 6 dargelegte Schaltstellung eingestellt werden, um beispielsweise eine weitere Probe in die Probenschleife 52 einzubringen.

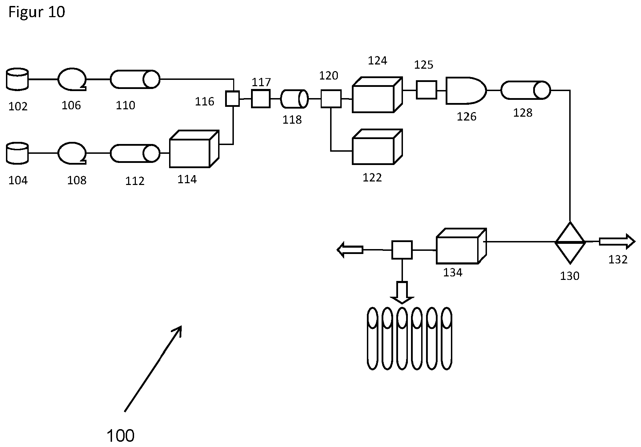

Figur 10 zeigt in schematischer Darstellung eine Chromatographie-Anlage 100 mit einem Gas-Flüssig-Abscheider 130, welche für eine überkritische Flüssigkeitschromatographie geeignet ist.

Ein solches System wird beispielhaft unter Verwendung von überkritischem CO₂ beschrieben, wobei Methanol als exemplarisches Lösungsmittel dargestellt wird. Selbstverständlich sind Systeme in denen andere Lösungsmittel, vorzugsweise organische Lösungsmittel eingesetzt werden, oder andere überkritische Fluide verwendet werden, ähnlich aufgebaut.

Wie in Fig. 10 gezeigt ist, werden die jeweiligen Fluide in Vorratsbehältern vorgehalten, insbesondere das weiterhin in einem überkritischen Zustand eingesetzte Gas in einem Speichertank 102 und das Lösungsmittel einem Speichertank 104 bereitgestellt, welche über jeweils über eine Pumpe 106, 108 gefördert aus den Speichertanks 102, 104 zu den weiteren Bestandteilen der Anlage werden können. In der vorliegend beschriebenen Anlage 100 ist vorzugsweise in jeder Fluidzuleitung eine Vorbereitungsstufe 110, 112 vorgesehen, über die die Flüssigkeiten temperiert werden können. Ferner kann eine Nivellierung der durch die Pumpen indizierten Druckschwankungen bereitgestellt werden. Demgemäß kann diese Vorbereitungsstufe beispielsweise als Wärmetauscher oder als Pumpe ausgebildet sein. In der Lösungsmittelleitung ist eine Zugabeeinheit 114 vorgesehen, beispielsweise ein Injektor, über den eine aufzutrennende Mischung in die Anlage 100 eingeleitet wird, bevor das CO₂ und das Lösungsmittel in ein Verbindungsstück 116 geleitet und einer Chromatographiesäule 118 zugeführt werden. Eine bevorzugte Ausführungsform einer Zugabeeinheit 114 wird in Figuren 2 und 3 dargelegt. Zwischen dem Verbindungsstück 116 und der Chromatographiesäule 118 ist ein schaltbarer Mischer 117 vorgesehen, der über ein aus Gründen der Übersichtlichkeit nicht dargestelltes Mischerschaltventil schaltbar, so dass in einer ersten Position der Mischer 117 zuschaltbar ist und in einer zweiten Position der Mischer 117 umleitbar ist. Eine bevorzugte Ausführungsform eines Mischerschaltventils, welches mit einem Mischer verbunden ist, wird in Figuren 4 und 5 dargelegt.

In der vorliegenden Anlage 100 sind der Chromatographiesäule 118 zwei Analyseeinheiten nachgeschaltet, wobei hierzu eine Probeausleiteinheit 120 mit einem Massenspektrometer 122 verbunden ist und nach der Probeausleiteinheit ein UV-Detektor 124 vorgesehen ist. Nach der Analyseeinheit ist vorliegend eine Einrichtung zur Bereitstellung eines Zusatzvolumens 125 dargelegt, welches insbesondere dazu dient, die Laufzeit der Flüssigkeit zu erhöhen, um Ergebnisse beispielsweise des Massenspektrometers 122 auswerten zu können. Der in der Leitung nach der Einrichtung zur Bereitstellung eines Zusatzvolumens 125 vorgesehene Rückdruckregler 126 hält den jeweiligen Druck aufrecht, der notwendig ist, dass das Fluid in einem überkritischen Zustand verbleibt. Nach dem Rückdruckregler 126 ist ein Wärmetauscher 128 vorgesehen, der ein Einfrieren des Aerosols beim Entspannungsvorgang verhindert. Nachfolgend wird das Aerosol in einen erfindungsgemäßen Gas-Flüssig-Abscheider 130 eingeleitet, wobei das Gas der Anlage über Auslass 132 abgeleitet wird.

Die Flüssigkeit wird in einen Fraktionssammler 134 eingeleitet und in diesem fraktioniert. Das in den fraktionierten Proben enthaltene Lösungsmittel kann aus den Proben entfernt werden.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein, soweit es in den durch die beigefügten Patentansprüche definierten Schutzbereich fällt.

## Patentansprüche

1. Chromatographie-Anlage (1, 100) umfassend mindestens zwei Pumpen (7, 9, 106, 108), eine erste Pumpe (7, 106), die mit einem Flüssigkeitsreservoir (3, 102) für ein erstes Fluid verbindbar oder verbunden ist, und eine zweite Pumpe (9, 108), die mit einem Flüssigkeitsreservoir (5, 104) für ein zweites Fluid verbindbar oder verbunden ist, wobei die Pumpenauslassleitungen der ersten erste Pumpe (7, 106) und der zweiten Pumpe (9, 108) mit einem Verbindungsstück (29, 76, 116) verbunden sind und nach diesem Verbindungsstück (29, 76, 116) in Flussrichtung gesehen eine Chromatographiesäule (51, 118) vorgesehen ist,
**dadurch gekennzeichnet, dass**
in Flussrichtung gesehen vor dem Verbindungsstück (29, 76, 116) eine Zugabeeinheit (10, 11, 48, 114) vorgesehen ist und zwischen Verbindungsstück (29, 76, 116) und Chromatographiesäule (51, 118) ein Mischerschaltventil (30, 82) und ein über das Mischerschaltventil (30, 82) schaltbarer Mischer (31, 84, 117) vorgesehen ist, wobei das Mischerschaltventil (30, 82) mindestens zwei Schaltpositionen aufweist, wobei in einer ersten Position der Mischer (31, 84, 117) zuschaltbar ist und in einer zweiten Position der Mischer (31, 84, 117) umleitbar ist.

2. Chromatographie-Anlage gemäß Anspruch 1, **dadurch gekennzeichnet, dass** der Fließweg eines Fluids in der zweiten Position des Mischerschaltventils (30, 82), bei der der Mischer (31, 84, 117) umleitbar ist, kürzer ist als in der ersten Position des Mischerschaltventils (30, 82), bei der der Mischer (31, 84, 117) zuschaltbar ist.

3. Chromatographie-Anlage gemäß Anspruch 1 oder 2, **dadurch gekennzeichnet, dass** die Zugabeeinheit (10, 11, 48, 114) nach der ersten Pumpe (7, 106) vorgesehen ist, in Flussrichtung gesehen.

4. Chromatographie-Anlage gemäß mindestens einem der vorhergehenden Ansprüche, **dadurch gekennzeichnet, dass** die Zugabeeinheit (10, 11, 48, 114) ein Injektionsventil (12, 50) umfasst, wobei das Injektionsventil zumindest zwei Probenschleifen-Ports (16, 18) sowie zwei Hochdruck-Ports (20, 22) für das Zuführen und Abführen von unter hohem Druck stehendem Fluid aufweist,

5. Chromatographie-Anlage gemäß mindestens einem der vorhergehenden Ansprüche, **dadurch gekennzeichnet, dass** das Mischerschaltventil (30, 82) mindestens vier Ports (34, 36, 42, 44) umfasst, wobei zwei Ports (34, 36) mit einem Mischer (31, 84, 117) verbunden sind.

6. Chromatographie-Anlage gemäß mindestens einem der vorhergehenden Ansprüche, **dadurch gekennzeichnet, dass** eine Chromatographie mit einem Lösungsmittelgradienten durchführbar ist.

7. Chromatographie-Anlage gemäß mindestens einem der vorhergehenden Ansprüche, **dadurch gekennzeichnet, dass** dem Flüssigkeitsreservoir (5, 104) für ein zweites Fluid und der zweiten Pumpe (9, 108) eine Kühlung für das Fluid vorgesehen ist.

8. Chromatographie-Anlage gemäß mindestens einem der vorhergehenden Ansprüche, **dadurch gekennzeichnet, dass** der Mischer (31, 84, 117) als statischer Mischer ausgestaltet ist.

9. Chromatographie-Anlage gemäß mindestens einem der vorhergehenden Ansprüche, **dadurch gekennzeichnet, dass** die Chromatographie-Anlage (1, 100) über eine Chromatographie-Anlagen-Steuerung steuerbar ist.

10. Chromatographie-Anlage gemäß mindestens einem der vorhergehenden Ansprüche, **dadurch gekennzeichnet, dass** die Chromatographie-Anlage als SFC-Anlage ausgestaltet ist, wobei die Chromatographie-Anlage (1, 100) eine Chromatographiesäule (51, 118) und in Flussrichtung gesehen nachfolgend mindestens ein Rückdruckregler (126) aufweist.

11. Chromatographie-Anlage gemäß mindestens einem der vorhergehenden Ansprüche, **dadurch gekennzeichnet, dass** in Flussrichtung gesehen nach dem Rückdruckregler (126) ein Gas-Flüssig-Abscheider (130) vorgesehen ist.

12. Verfahren zur Durchführung einer Chromatographie umfassend den Einsatz einer Chromatographie-Anlage gemäß mindestens einem der vorhergehenden Ansprüche 1 bis 11.

13. Verfahren gemäß Anspruch 12, **dadurch gekennzeichnet, dass** das Flüssigkeitsreservoir (3, 102) für ein erstes Fluid ein erstes Lösemittel enthält, das bei Normalbedingungen flüssig ist, und das Flüssigkeitsreservoir (3, 102) für ein zweites Fluid enthält, das bei Normalbedingungen gasförmig ist.

14. Verfahren gemäß Anspruch 12 oder 13, **dadurch gekennzeichnet, dass** beim Auftragen einer aufzutrennenden Probe auf die Chromatographiesäule (51, 118) das Mischerschaltventil (30, 82) in die zweite Position geschaltet ist und das Fluid um den Mischer geleitet wird.

## Claims

1. A chromatography system (1, 100) comprising at least two pumps (7, 9, 106, 108), a first pump (7, 106) which is connectable or connected with a liquid reservoir (3, 102) for a first fluid, and a second pump (9, 108) which is connectable or connected with a liquid reservoir (5, 104) for a second fluid, wherein the pump outlet lines from the first pump (7, 106) and the second pump (9, 108) are connected with a connection piece (29, 76, 116) and, viewed in the direction of flow, a chromatography column (51, 118) is provided downstream of this connection piece (29, 76, 116),
**characterized in that**,
viewed in the direction of flow, an addition unit (10, 11, 48, 114) is provided upstream of the connection piece (29, 76, 116), and a mixer switching valve (30, 82) and a mixer (31, 84, 117) switchable by way of the mixer switching valve (30, 82) are provided between the connection piece (29, 76, 116) and chromatography column (51, 118), wherein the mixer switching valve (30, 82) has at least two switching positions, wherein the mixer (31, 84, 117) is connectable in a first position and the mixer (31, 84, 117) is bypassable in a second position.

2. The chromatography system according to Claim 1, **characterized in that** the flow path of a fluid in the second position of the mixer switching valve (30, 82), in which the mixer (31, 84, 117) is bypassable, is shorter than in the first position of the mixer switching valve (30, 82), in which the mixer (31, 84, 117) is connectable.

3. The chromatography system according to Claim 1 or 2, **characterized in that**, viewed in the direction of flow, the addition unit (10, 11, 48, 114) is provided downstream of the first pump (7, 106).

4. The chromatography system according to at least one of the preceding claims, **characterized in that** the addition unit (10, 11, 48, 114) comprises an injection valve (12, 50), wherein the injection valve has at least two sample loop ports (16, 18) and two high-pressure ports (20, 22) for infeed and outfeed of high-pressure fluid.

5. The chromatography system according to at least one of the preceding claims, **characterized in that** the mixer switching valve (30, 82) comprises at least four ports, wherein two ports are connected with a mixer (31, 84, 117).

6. The chromatography system according to at least one of the preceding claims, **characterized in that** a chromatographic procedure with a solvent gradient is performable.

7. The chromatography system according to at least one of the preceding claims, **characterized in that** fluid cooling is provided for the liquid reservoir (5, 104) for a second fluid and the second pump (9, 108).

8. The chromatography system according to at least one of the preceding claims, **characterized in that** the mixer (31, 84, 117) is configured as a static mixer.

9. The chromatography system according to at least one of the preceding claims, **characterized in that** the chromatography system (1, 100) is controllable by way of a chromatography system controller.

10. The chromatography system according to at least one of the preceding claims, **characterized in that** the chromatography system is configured as an SFC system, wherein the chromatography system (1, 100) has a chromatography column (51, 118) and, viewed in the direction of flow, at least one downstream backpressure regulator (126).

11. The chromatography system according to at least one of the preceding claims, **characterized in that**, viewed in the direction of flow, a gas-liquid separator (130) is provided downstream of the backpressure regulator (126).

12. A method for carrying out a chromatographic procedure comprising the use of the chromatography system according to at least one of preceding claims 1 to 11.

13. The method according to Claim 12, **characterized in that** the liquid reservoir (3, 102) for a first fluid contains a first solvent which is liquid under standard conditions, and the liquid reservoir (3, 102) for a second fluid contains which is gaseous under standard conditions.

14. The method according to Claim 12 or 13, **characterized in that**, on application of a sample to be separated to the chromatography column (51, 118), the mixer switching valve (30, 82) is switched into the second position and the fluid is bypassed around the mixer.

## Revendications

1. Installation de chromatographie (1, 100) comprenant au moins deux pompes (7, 9, 106, 108), une première pompe (7, 106), qui peut être reliée ou est reliée à un réservoir de liquide (3, 102) pour un premier fluide, et une deuxième pompe (9, 108), qui peut être reliée ou est reliée à un réservoir de liquide (5, 104) pour un deuxième fluide, les conduites de sortie de pompe de la première pompe (7, 106) et de la deuxième pompe (9, 108) étant reliées à une pièce de liaison (29, 76, 116) et une colonne de chromatographie (51, 118) étant prévue, dans la direction d'écoulement, après cette pièce de liaison (29, 76, 116),
**caractérisée en ce que**
une unité d'ajout (10, 11, 48, 114) est prévue, dans la direction d'écoulement, avant la pièce de liaison (29, 76, 116), et une soupape de commutation de mélangeur (30, 82) et un mélangeur (31, 84, 117) commutable par l'intermédiaire de la soupape de commutation de mélangeur (30, 82) sont prévus entre la pièce de liaison (29, 76, 116) et la colonne de chromatographie (51, 118), la soupape de commutation de mélangeur (30, 82) présentant au moins deux positions de commutation, le mélangeur (31, 84, 117) pouvant être mis en circuit dans une première position et le mélangeur (31, 84, 117) pouvant être contourné dans une deuxième position.

2. Installation de chromatographie selon la revendication 1, **caractérisée en ce que** le trajet d'écoulement d'un fluide dans la deuxième position de la soupape de commutation de mélangeur (30, 82), dans laquelle le mélangeur (31, 84, 117) peut être contourné, est plus court que dans la première position de la soupape de commutation de mélangeur (30, 82), dans laquelle le mélangeur (31, 84, 117) peut être mis en circuit.

3. Installation de chromatographie selon la revendication 1 ou 2, **caractérisée en ce que** l'unité d'ajout (10, 11, 48, 114) est prévue après la première pompe (7, 106), dans la direction d'écoulement.

4. Installation de chromatographie selon au moins l'une des revendications précédentes, **caractérisée en ce que** l'unité d'ajout (10, 11, 48, 114) comprend une soupape d'injection (12, 50), la soupape d'injection présentant au moins deux ports de boucle d'échantillonnage (16, 18) ainsi que deux ports haute pression (20, 22) pour l'amenée et l'évacuation d'un fluide sous haute pression.

5. Installation de chromatographie selon au moins l'une des revendications précédentes, **caractérisée en ce que** la soupape de commutation de mélangeur (30, 82) comprend au moins quatre ports (34, 36, 42, 44), deux ports (34, 36) étant reliés à un mélangeur (31, 84, 117).

6. Installation de chromatographie selon au moins l'une des revendications précédentes, **caractérisée en ce qu'**une chromatographie avec un gradient de solvant peut être réalisée.

7. Installation de chromatographie selon au moins l'une des revendications précédentes, **caractérisée en ce qu'**un refroidissement du fluide est prévu pour le réservoir de liquide (5, 104) pour un deuxième fluide et la deuxième pompe (9, 108).

8. Installation de chromatographie selon au moins l'une des revendications précédentes, **caractérisée en ce que** le mélangeur (31, 84, 117) est conçu sous la forme d'un mélangeur statique.

9. Installation de chromatographie selon au moins l'une des revendications précédentes, **caractérisée en ce que** l'installation de chromatographie (1, 100) peut être commandée par l'intermédiaire d'une commande d'installation de chromatographie.

10. Installation de chromatographie selon au moins l'une des revendications précédentes, **caractérisée en ce que** l'installation de chromatographie est conçue sous la forme d'une installation SFC, l'installation de chromatographie (1, 100) présentant une colonne de chromatographie (51, 118) et, à sa suite dans la direction d'écoulement, au moins un régulateur de contre-pression (126).

11. Installation de chromatographie selon au moins l'une des revendications précédentes, **caractérisée en ce qu'**un séparateur gaz-liquide (130) est prévu, dans la direction d'écoulement, après le régulateur de contre-pression (126).

12. Procédé de réalisation d'une chromatographie comprenant l'utilisation d'une installation de chromatographie selon au moins l'une des revendications 1 à 11 précédentes.

13. Procédé selon la revendication 12, **caractérisé en ce que** le réservoir de liquide (3, 102) pour un premier fluide contient un premier solvant qui est liquide dans des conditions normales, et le réservoir de liquide (3, 102) pour un deuxième fluide contient qui est gazeux dans des conditions normales.

14. Procédé selon la revendication 12 ou 13, **caractérisé en ce que**, lors de l'application d'un échantillon à séparer sur la colonne de chromatographie (51, 118), la soupape de commutation de mélangeur (30, 82) est commutée dans la deuxième position et le fluide contourne le mélangeur.
